# EUROPEAN PATENT SPECIFICATION

(11) **EP 1 252 039 B1**
(45) Date of publication and mention of the grant of the patent: **23.04.2008**
(21) Application number: 01946819.8
(22) Date of filing: 29.01.2001
(51) Int. Cl.: B60P 1/64

(54) **REMOVABLE LOAD BED FOR VEHICLES**
ABNEHMBARE LADEPLATTFORM FÜR KRAFTFAHRZEUGE
SUPPORT DE CHARGEMENT AMOVIBLE POUR VEHICULES

(30) Priority: 28.01.2000 US 493478
(43) Date of publication of application: 30.10.2002
(73) Proprietor: Simpson Tranzformer, Penticton, British Columbia V2A 8V6 (CA); Simpson, Patrick Dana, Penticton, British Columbia V2A 8V6 (CA); Simpson, Terry Edward, Penticton, British Columbia V2A 8V6 (CA); Simpson, Dana William, Penticton, British Columbia V2A 8V6 (CA)
(72) Inventor: SIMPSON, Patrick, Dana, Penticton, British Columbia V2A 8V6 (CA); SIMPSON, Terry, Edward, Penticton, British Columbia V2A 8V6 (CA); SIMPSON, Dana, William, Penticton, British Columbia V2A 8V6 (CA)
(74) Representative: Murnane, Graham John
(86) International application number: PCT/CA2001/000078
(87) International publication number: WO 2001/054943

(56) References cited:
- DE-U- 7 415 985
- FR-A- 2 686 843
- US-A- 3 034 674
- US-A- 3 221 913
- US-A- 3 684 112
- US-A- 3 768 678

## Description

### FIELD OF THE INVENTION

The present invention relates to devices for loading and unloading a movable frame onto a vehicle.

### BACKGROUND OF THE INVENTION

A frame, such as the frame of a motorized or unmotorized vehicle, may be adapted for loading and unloading a movable frame. It may for example be advantageous to load the movable frame from the ground, moving it up and onto the vehicle's stationary frame for transportation to another location. The movable frame may be adapted to support a load, so that the load and the movable frame may be transferred to and from the frame on the vehicle chassis. In some devices, this may be accomplished using an arrangement of elevating booms and guide systems that are controlled by an operator.

A number of patents disclose innovative devices in this general field of technology.

US Patent No. 1, 798, 328 (Perkins et al.) discloses a dumping body frame truck that is driven by a chain drive. The body is formed by telescopic sections that are collapsed to dump a load.

US Patent No. 2, 811, 269 (Anderson) discloses a removable bed that relies on a winch assembly to draw a truck body onto a chassis.

US Patent No. 5, 203, 788 (Marmur) discloses an apparatus for loading a container onto a truck body or trailer. This arrangement discloses the use of a pivoting arm and a cable to move the trailer.

US Patent No. 5, 269, 746 (Zoromski) discloses a container loading and unloading system that may be particularly suited for loading campers and cargo boxes onto a truck bed.

US Patent No. 5, 856, 869 (Slokum et al.) discloses a removable load bed that includes a tiltable bed that is operated by a piston to control loading and unloading of the container.

US Patent No. 3, 034, 674 (Bertoglio et al.) discloses an automotive truck with a pivotally mounted truck bed and a winch provided on the truck to control loading and unloading of a demountable body onto the truck bed.

There remains a need for alternative removable load bed assemblies for use with frames, such as vehicle frames, to provide methods of transferring a load to and from a frame, for use for example on track and rubber tired vehicles.

### SUMMARY OF THE INVENTION

According to the invention there is provided a loading apparatus according to claim 1.

It will be appreciated that the terms "movable frame" and "stationary frames" are merely relative terms, indicating that in various aspects of the invention, the movable frame moves with respect to the stationary frame. The stationary frame may itself be adapted for movement. In some embodiments, for example, the stationary frame may be the frame of a vehicle, such as the frame of a truck chassis.

In various embodiments, the apparatus for mounting the frame may include a guide system, for guiding the movable frame onto the stationary frame, a locking mechanism for locking the movable frame in place on the stationary frame and various mechanisms for controlling the movement of the movable frame with respect to the stationary frame. In some embodiments, the invention may provide an apparatus that may be retrofitted to a truck chassis for loading alternative bodies or boxes onto the truck chassis.

In one aspect, the invention provides an apparatus for mounting a movable frame on a stationary frame, in which the apparatus includes an elevatable support member mounted on the stationary frame. The elevatable support member may be characterized as having a first end portion and a second end portion, with the second end portion being mounted to the stationary frame for pivotal movement with respect to the stationary frame about an axis.

A drive may be provided, cooperating with the stationary frame, and adapted for connection with the movable frame so that the drive may be operated to slidably move the movable frame onto stationary frame. The movable frame may cooperate or interconnect with the elevatable support member to tilt the elevatable support as the movable frame slides onto the elevatable support, to adjust the angle of the elevatable support with respect to the stationary frame. The movement of the first end portion of the elevatable support may be modulated as the elevatable support adapts to or assumes an angle at which the elevatable support can slidingly engage the movable frame. An interconnection between the movable frame and the elevatable support may thereby exert a pivotal force about the elevatable support axis to adjust the angle of the elevatable support.

In an alternative aspect a movement modulator, such as an actuator or dampening device, may also be provided, mounted on the stationary frame and cooperating with the elevatable support member. The modulator may be non powered and may be used as a passive dampening device or may be powered. The modulator may be used to control, actuate or dampen the speed and or extent of pivotal movement of the elevatable support about the elevatable support axis, by a passive (non-powered) or active (powered) mechanism.

In conjunction with sliding movement of the movable frame onto or off of the elevatable support, the elevatable support in conjunction with the movement modulator may control the effect of the pivotal force of the movable frame about the axis of the elevatable support. The movable frame may exert a pivotal force in either a clockwise or anti clockwise direction about the axis of the elevatable support, depending on the positioning and loading of the movable frame.

In an alternative aspect, the invention provides a loading apparatus for a vehicle, the apparatus including: (1) a first frame with a drive, such as a stationary frame with a drive wheel or sprocket; (2) a second frame having a flexible tensionable tag connector mounted on it for removably connecting the second frame to the drive; and, (3) a locking system for releasably guarding the connector tag in operable engagement with the drive. The system may for example have a movable arm positioned to guard against disengagement of the connector tag from the drive. A second arm member, may cooperate with the first arm as components of the locking system by being movable between a generally closed position in which the locking mechanism acts to ensure the engagement of the connector tag with the drive, and a generally open position in which the drive is free to cooperate with the movable frame without engaging the connector tag.

In another aspect the invention provides a first stationary frame, to slidably receive the second movable frame. The stationary frame may also include a guide system for aligning the movable frame on the stationary frame during slidable movement of the movable frame, in which the guide may for example have one or more rails shaped to cooperate with the movable frame. The stationary frame may also include a parrallel drive system that cooperates with the oncoming frame. The parrallel drive system may consist of spaced apart drives at the rear end of the stationary frame that cooperate with the flexible connection to the movable frame. The spaced apart parallel drives may be engaged with the flexible connections to the movable frame so that operation of the drives ensures that the movable frame is aligned with the stationary frame. For example, tag chains connecting the movable frame to each of two spaced apart parallel drives on the stationary frame may be set on drive sprockets in a timed position, so that activation of the drive sprockets results in alignment of the movable frame.

In one aspect, the invention provides a rigid lift arm pivotally mounted about a lift arm axis on the stationary frame and adapted to releasably engage the movable frame (the lift arms being capable of both engaging the movable frame and releasing, i.e. not engaging, the movable frame). When the lift arm engages the movable frame, it may act to pivot the movable frame into the raised position with the lift arm pivoting about the lift arm axis. The movable frame may comprise a plurality of longitudinally spaced apart lift arm attachment positions, such as engagement pins or pockets, and the lift arm may comprise a head end spaced apart from the lift arm axis. The lift arm head end may be adapted to accept the lift arm attachment positions (engagement pins or pockets) when the movable frame is being moved by the drive onto the stationary frame, to pivot the movable frame into the raised position. The lift arm head may also be adapted not to accept the attachment positions when the movable frame is being moved off of the stationary frame. In this way, the lift arm may for example be used to provide a mechanism for dumping a box or other body attached to the movable frame. The lift arm may be adjustable between an actuated position in which the lift arm head is engagable with the lift arm pins and a storage position in which the lift arm is not engagable with the lift arm pins. In alternative aspects, a lift arm may be attached to the movable frame rather than the stationary frame.

### BRIEF DESCRIPTION OF THE DRAWINGS

In drawings which illustrate embodiments of the invention,
- Figure 1: is a side view of a first embodiment of the invention showing a movable frame engaging a stationary frame on a vehicle via a chain;
- Figure 2: is a top view of the vehicle showing the stationary frame attached to the vehicle;
- Figure 3: is a rear end view of the rear block assemblies mounted on the rear of the vehicle;
- Figure 4: is a simplified side view of the first embodiment showing the relationship between a rear block assembly and a frame rail;
- Figure 5: is a simplified view of the locking pin assembly;
- Figure 6: is a side view of the moveable frame;
- Figure 7: is a top view of the movable frame;
- Figure 8: is a simplified side view of the chain detail attached to the movable frame;
- Figure 9: is a broken away side view detail of a locking mechanism in a closed position acting to retain the chain;

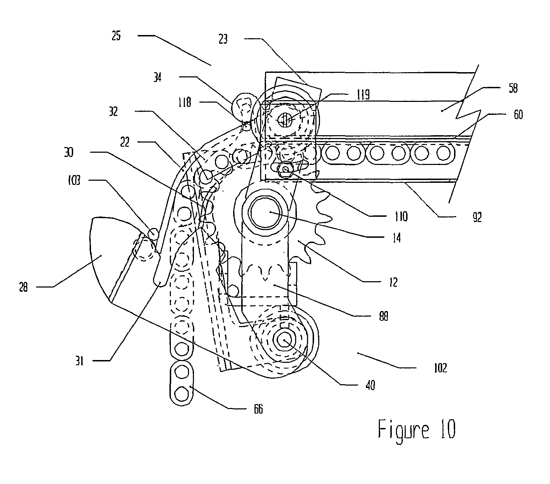

- Figure 10: is a broken away side view detail of a locking mechanism in a partially open position, showing the movable frame engaging in the locking system;
- Figure 11: is a broken away side view detail of a locking mechanism in a fully open position;
- Figure 12: is a simplified end-on view of the moveable frame loaded on the stationary frame showing interlocking of the rail systems;
- Figure 13A: is a broken away isometric rear side view detail of the locking mechanism in a closed position;
- Figure 13B: is a broken away isometric front top side view detail of the locking mechanism in a closed position;
- Figure 13C: is a broken away rear elevational detail view of the locking mechanism in a closed position;

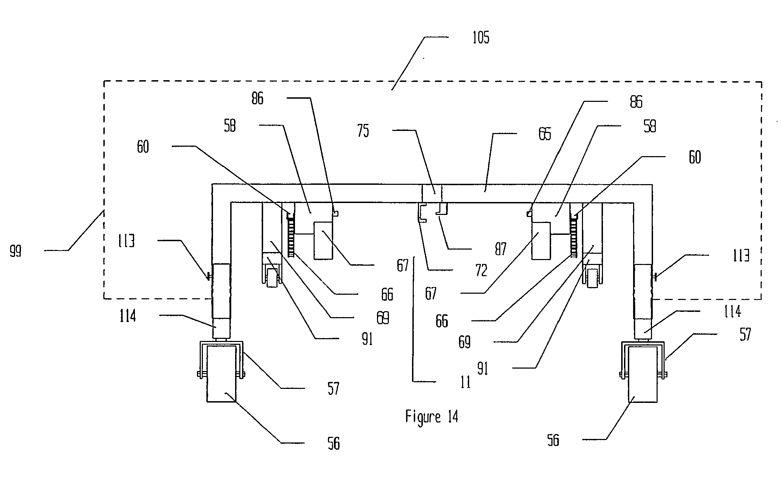

- Figure 14: is a front end view of the moveable frame;
- Figure 15: simplified view internal ramp and lift tab;
- Figure 16: is a schematic view of the stationary shoe showing shape;
- Figure 17: is a side view of the front end of the moveable frame;
- Figure 18: is a detailed side view of the stationary frame;
- Figure 19: is a detailed view of the elevatable support;

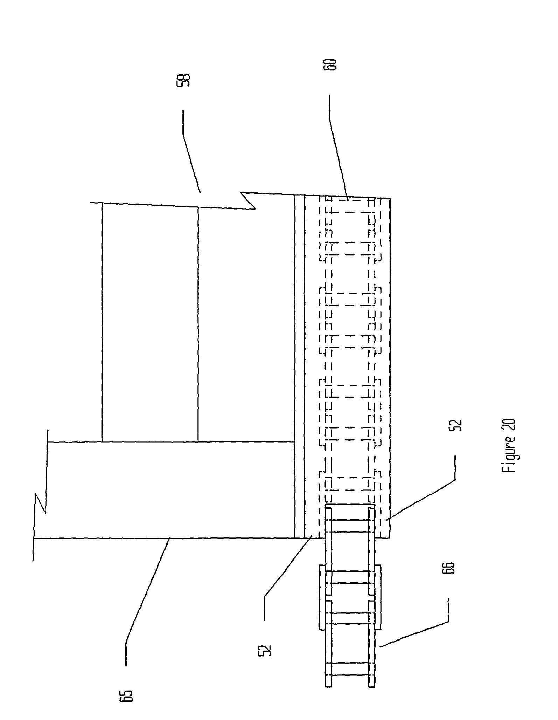

- Figure 20: is a detailed top view of the front of the moveable frame rail; and
- Figure 21: is a cut away side view of the movable frame balanced on the stationary frame.
- Figure 22: is a side elevational view showing a lift arm of the invention.

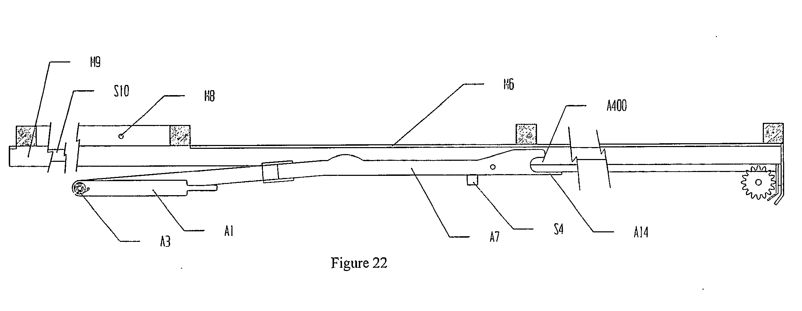

- Figure 22: is a side elevational view showing a lift arm of the invention in a storage position.

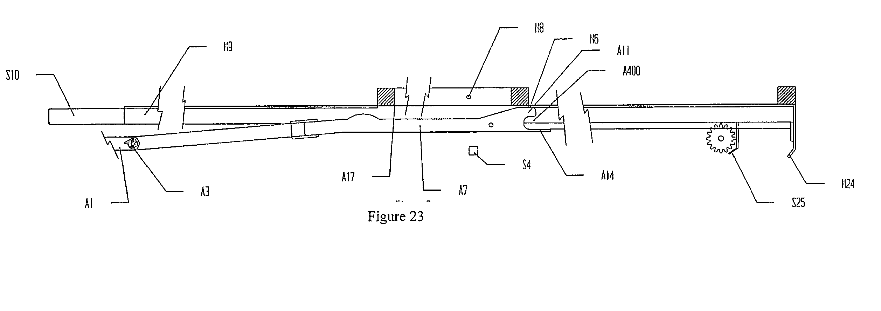

- Figure 23: is a side elevational view showing a lift arm of the invention in an actuated position.

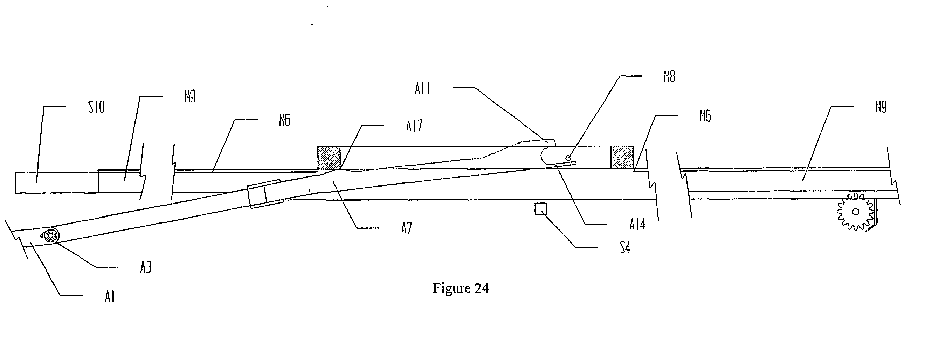

- Figure 24: is a side elevational view showing a lift arm of the invention showing a lift arm head moving towards engagement with a movable frame.

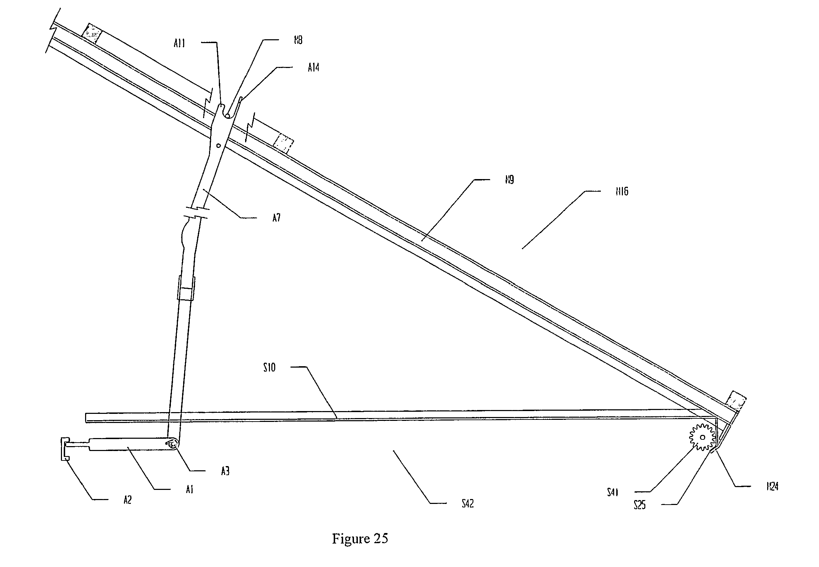

- Figure 25: is a side elevational view showing a movable frame biased into a raised position by a lift arm.

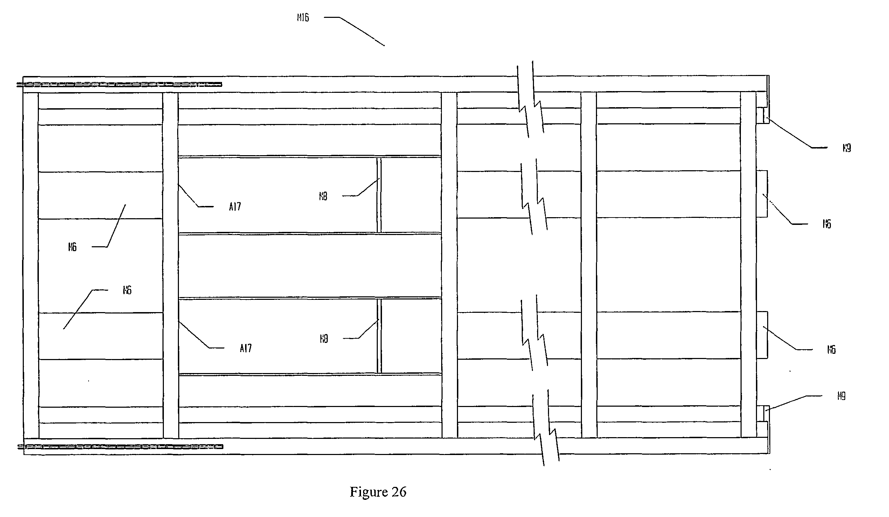

- Figure 26: is a top plan view of a movable frame, showing lift arm engagement pins.

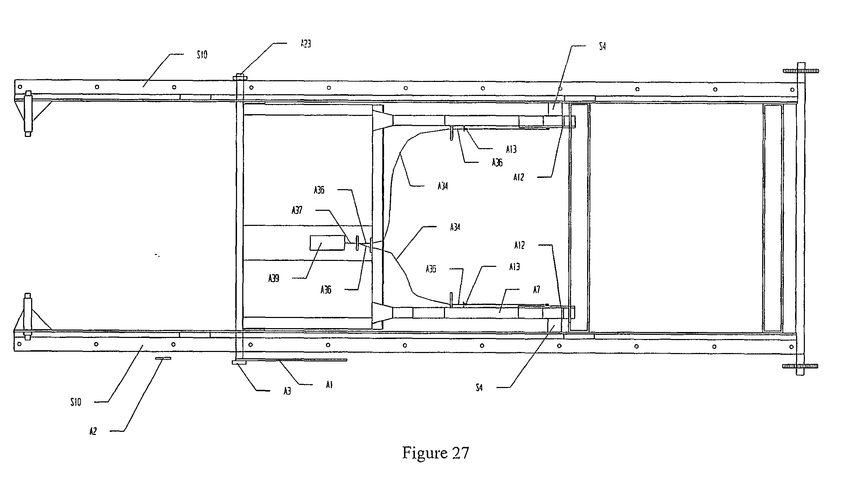

- Figure 27: is a top plan view of a stationary frame showing lift arms and associated lift arm actuation mechanisms.

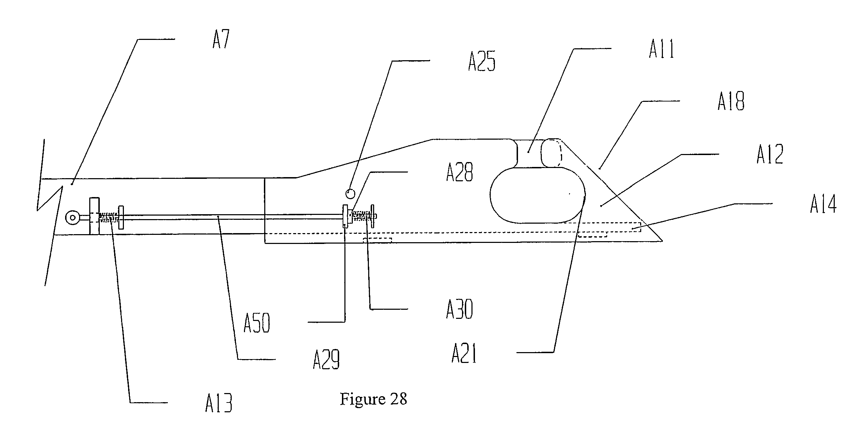

- Figure 28: is a broken away side elevational detail view of a lift arm head.

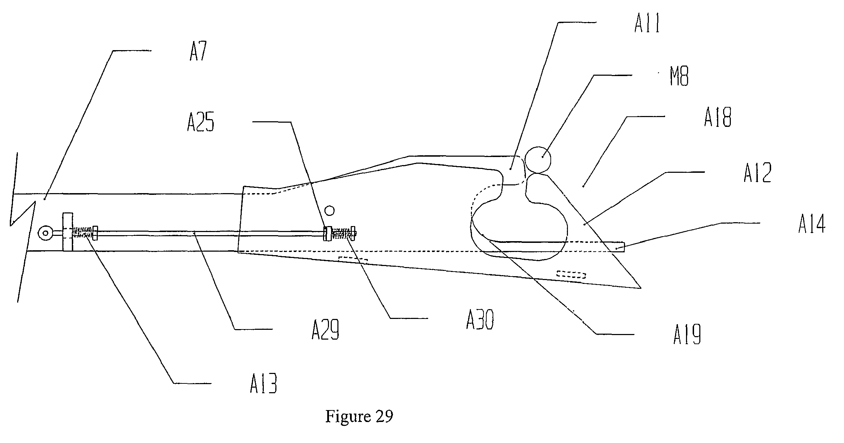

- Figure 29: is a broken away side elevational detail view of a lift arm head beginning to engage a lift arm engagement pin on a movable frame.

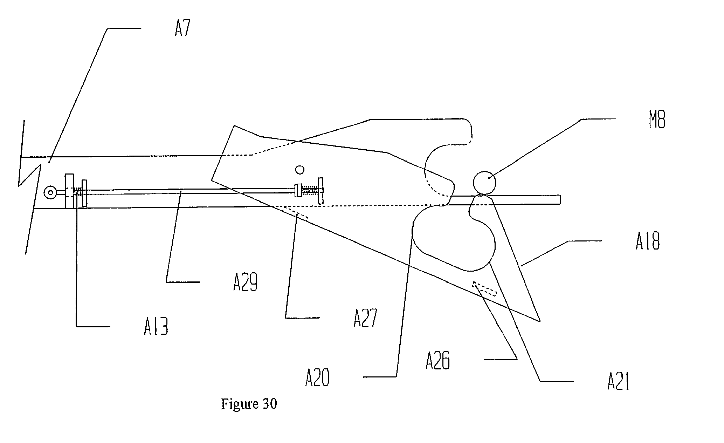

- Figure 30: is a broken away side elevational detail view of a lift arm head displaced by engagement with a lift arm engagement pin on a movable frame.

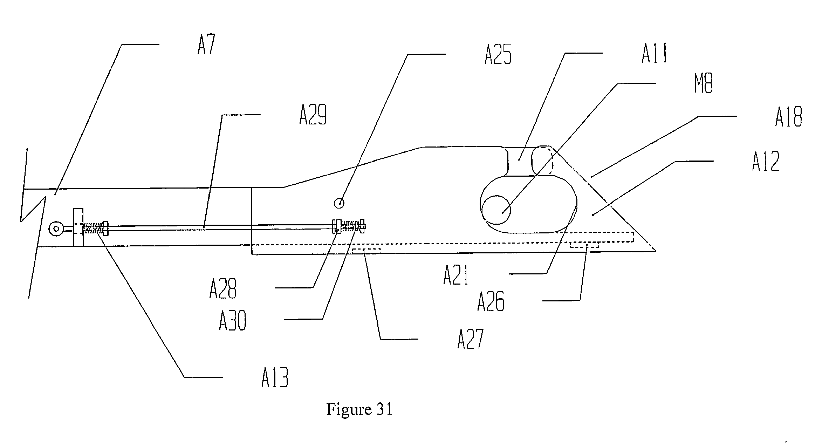

- Figure 31: is a broken away side elevational detail view of a lift arm head engaging a lift arm engagement pin positioned within the mouth of the lift arm head.

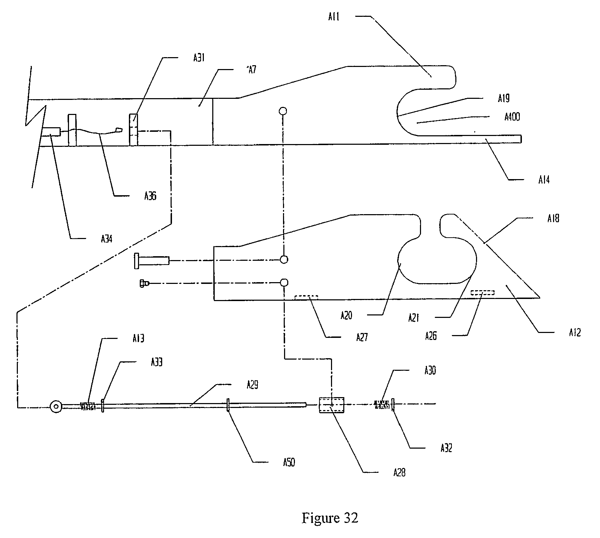

- Figure 32: is a partially exploded broke away side elevational view

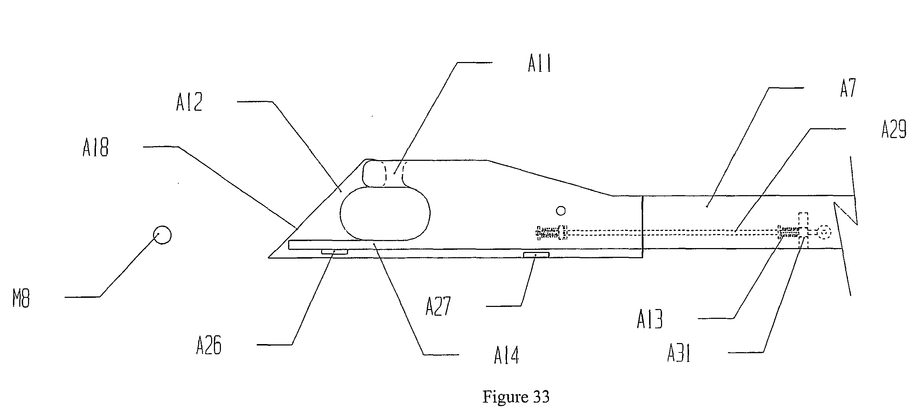

- Figure 33: is a broken away side elevational view showing a lift arm head.

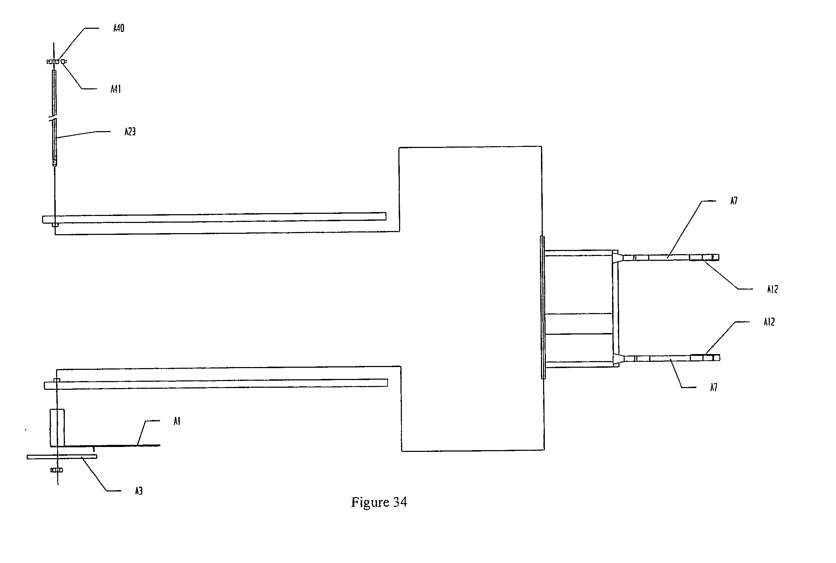

- Figure 34: is a schematic view showing a mechanism for actuation of a lift arm of the invention.

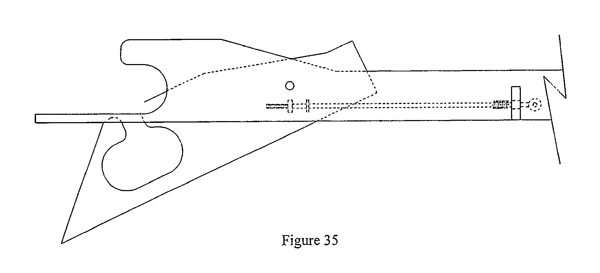

- Figure 35: is a broken away side elevational view showing a lift arm head displaced to accept a lift arm pin.

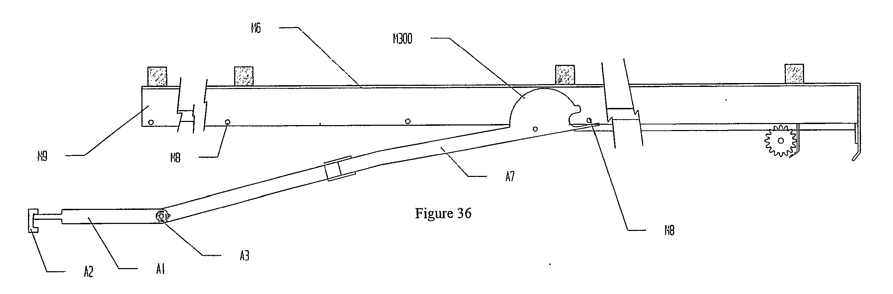

- Figure 36: is a schematic side elevational view showing an alternative embodiment of a lift arm of the invention.

### DETAILED DESCRIPTION

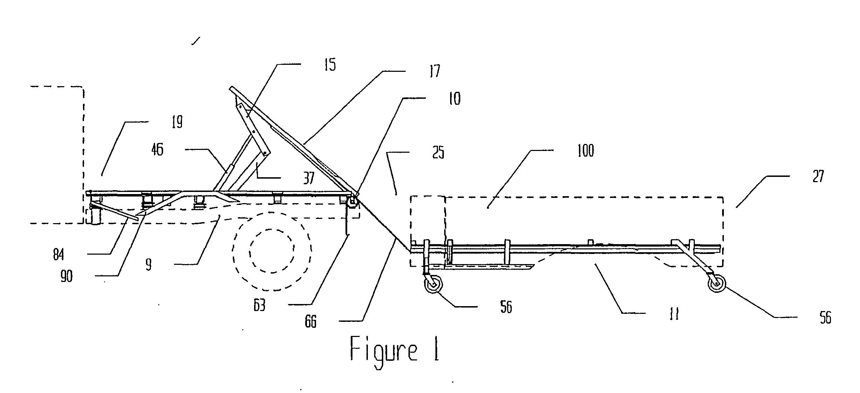

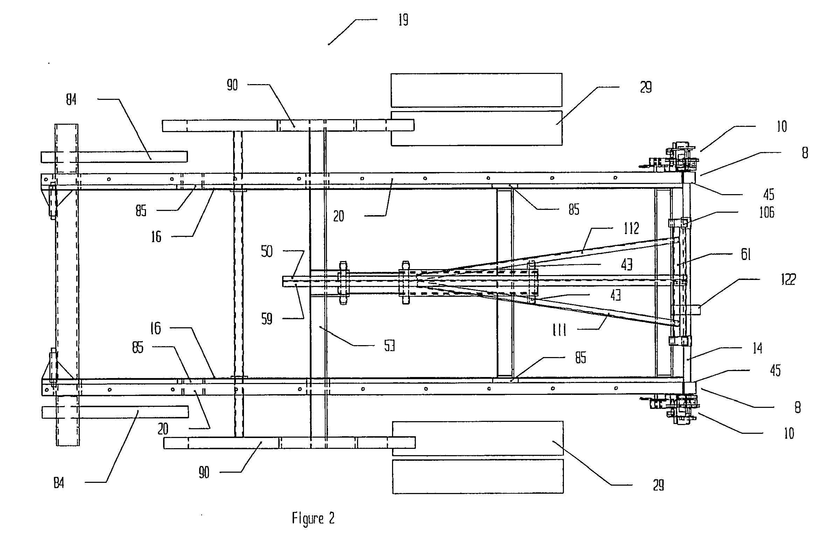

Various aspects of the invention are shown in Figures **1** and **2****,** in which a movable frame **11** is connected to a cab and chassis vehicle **13** via a chain **66,** the frame **11** having a load **100** securely mounted thereupon. The vehicle **13** has a chassis **9** and a stationary frame **19** securely mounted thereupon. The stationary frame **19** is a "skeleton body" and is secured to the chassis **9** by conventional means, and is arranged such that a front end of the frame is disposed towards the rear of the cab of the vehicle **13** and a rear end portion is disposed towards a rear end portion of the chassis **9.**

The stationary frame **19** may have a guide system, such as a guide system mounted on the chassis **9** of the vehicle **13** comprising a "skeleton-type" arrangement of rails **16.** The rails **16** are positioned parallel along the side of the chassis **9** and are shaped so as to allow efficient sliding and seating of the moveable frame **11** during loading and may be coated with an anti-friction material, such as ultra-high molecular weight (UHMW) polymer **20.** One skilled in the art will understand that polymers of this type act as a lubricant to assist the moveable frame **11** as it slides over the stationary frame **19,** as will be described below. It will be understood that there are many different types of coatings that may be used in this type of operation, including various polymeric coatings and materials. In one aspect, the guide system on stationary frame **19** is adapted for aligning the movable frame **11** on the stationary frame **19** during slidable movement of the movable frame, in which the guide may for example have one or more rails **44** shaped to cooperate with the movable frame. The stationary frame **19** may also include a parrallel drive system that cooperates with the oncoming movable frame **11** to align the frames.

An elevatable support **17** may be centrally and rotably attached to an axle **14** and includes a "skeleton framework" **61** having a separate guide system **59** consisting of a forwardly disposed end and a rearwardly disposed end. The guide system **59** consists of, a C-shaped channel **54** with an internal ramp **33,** and a slide rail **44.** The slide rail **44** is covered with UHMW **50** on upper and lower faces. The skeleton framework **61** has two ends and a center that is parallel to the axle **14.** The skeleton framework **61** ends are rotatably attached to the axle **14** by a pair of bushings **106.** The position of skeleton framework **61** on the axle **14** is maintained by a pair of cylindrical spacers **107.** Each spacer **107** is positioned on the axle **14** between the elevatable support bushings **106** and a pair of outer axle bearings **108.** Those skilled in the art will recognize that bearings of different types may be used in place of the bushings **106** and spacers **107.** The axle **14** is rotably mounted to the chassis **9** by the bearings **108** and a bearing **122.** Each bearing **108** is fixably attached to and located on the axle **14** adjacent the two end portions **21** and **55.** The bearings **108** are fixably attached to each of the chassis **9** frame rails. The bearing **122** is fixably attached and located in the center of axle **14** and is supported by stationary frame **19.** The axle **14** is driven by an electric motor **94.** Those skilled in the art will recognize that other types of motor may be used to implement aspects of the invention. The axle **14** has two end portions **21** and **55.** The motor **94** is attached to the axle **14** by a keyed sprocket and an endless roller chain **104.** The turning motion of the axle **14** is transferred to a pair of keyed sprockets **12** that are mounted on the ends of the axle **14.**

The guide system **59** is aligned parallel to and between the frame rails **16,** and is fixably attached to the framework **61** such that a movable frame receiver **72** aligns and interlocks with the slide rail **44** when the frame **11** is mounted on stationary frame **19,** as will be described. The bottom edge of the rearwardly disposed section of the guide system **59** is fixably attached to the top edge of the center portion of the skeleton framework **61**. A pair of support frame members **111** and **112** are attached to the guide system **59**, each having first and second ends. The first end top edges of the support members **111** and **112** are fixably attached to the bottom edge of the forwardly disposed end of guide system **59,** whereas the second ends are fixably attached to the corresponding ends of the skeleton framework **61.** The support members **111** and **112** support the forwardly disposed end of guide system **59,** thereby ensuring the guide system **59** remains parallel with the frame rails **58** on the moveable frame **11.** The top and bottom surface of the rail **44** is covered with UHMW **50.**

As best seen in Figures **1****,** **2****,** **3** and **19****,** a hydraulic cylinder **46** is attached to the stationary frame **19** and is moved by a pair of arms **15** and **37** that are pivotally attached to the frame **19,** a cross member **53** and the forwardly disposed end of the guide system **59.** The hydraulic cylinder **46** acts as a shock absorber during on-loading and off-loading and also allows an operator to stop the tilting motion of the moveable frame **11** at any time thereby giving the system a greater degree of control during operation. It will be understood that other "damping" systems may be used with the elevatable support **17.**

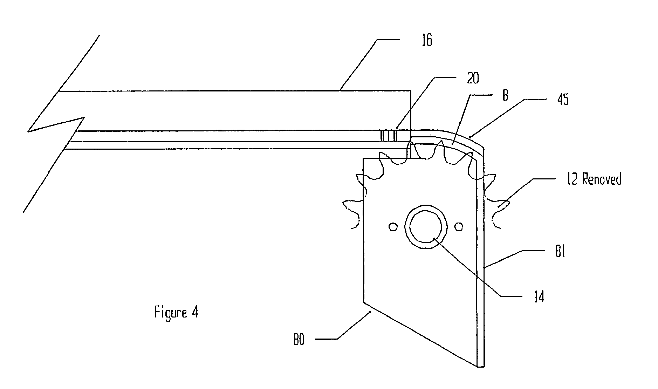

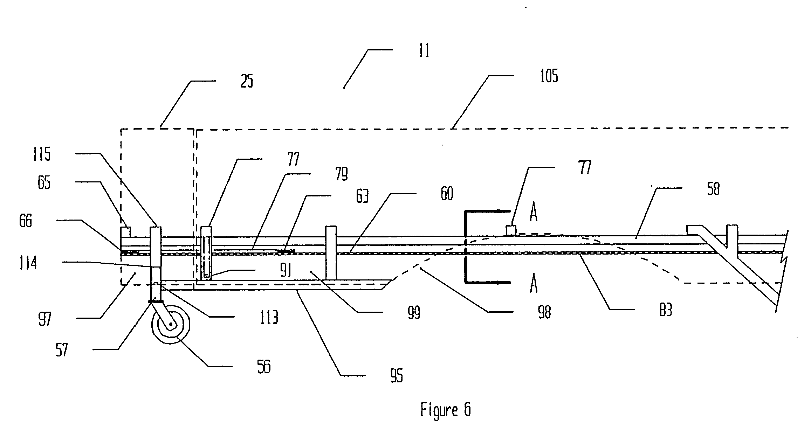

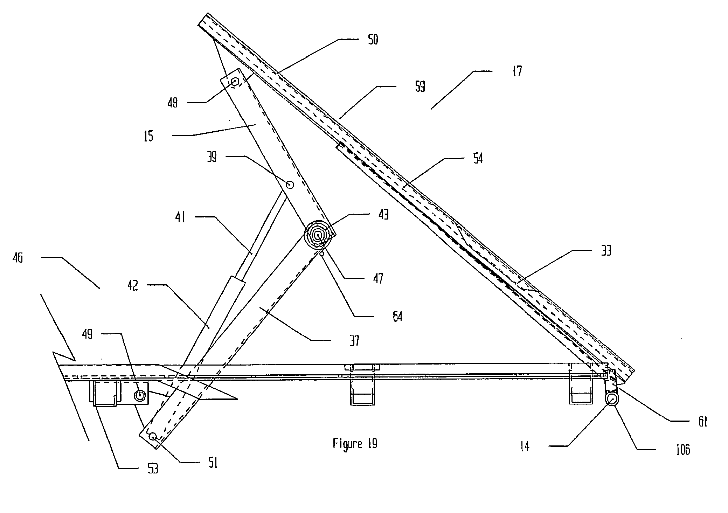

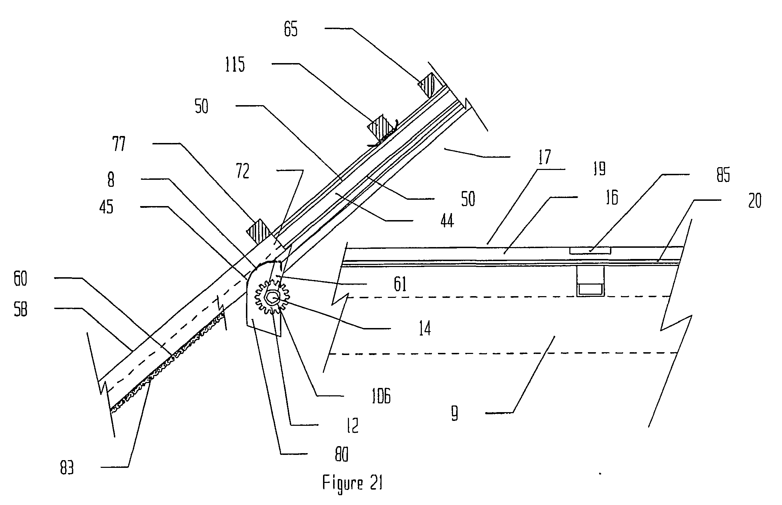

As best seen in Figure **21**, the elevatable support **17** is pivotally attached to the axle **14** that is positioned at the rear end of the vehicle **13.** The movable frame rail **58** pivots when loading or offloading on the surface of a slide **8** with the center of the circumference of axle **14** being the center of the arc of slide **8.** (see Figure **4**) This creates a common pivot point for both the receiver **72** on movable frame **11** and the elevatable support **17** thereby ensuring both alignment and non-binding movement between the elevatable support **17** and the receiver **72** (see Figure **6**) prior to interlocking and when interlocked. As best illustrated in Figures **2** and **19**, a pair of springs **43** assist in lifting and holding the elevatable support **17** up by exerting a twisting force on a hinge pin **47** that is fixably attached to the arm **15.** The outer coils of the springs **43** are attached to a bar **64** that is attached to the arm **37.** This twisting action assists in opening the arms **15** and **37** with the hinge pin **47** as the center axis. The lifting and maintaining of the elevatable support **17** vertical position may be accomplished by placing the springs in other areas, for example, over the cylinder **46** or to the frame **19** and lifting under the arms **15** and **37** below the hinge pin **47.** Those skilled in the art will recognize other means of assisting the lift and holding the elevatable support.

Also, those skilled in the art will recognize that the elevatable support **17** does not require arms **15** and **37** for the hydraulic cylinder **46**. Another possible method would be to use a longer cylinder thereby avoiding the use of the arms **15** and **37.**

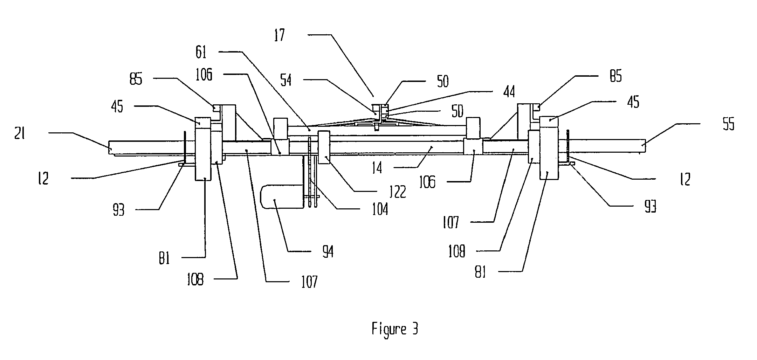

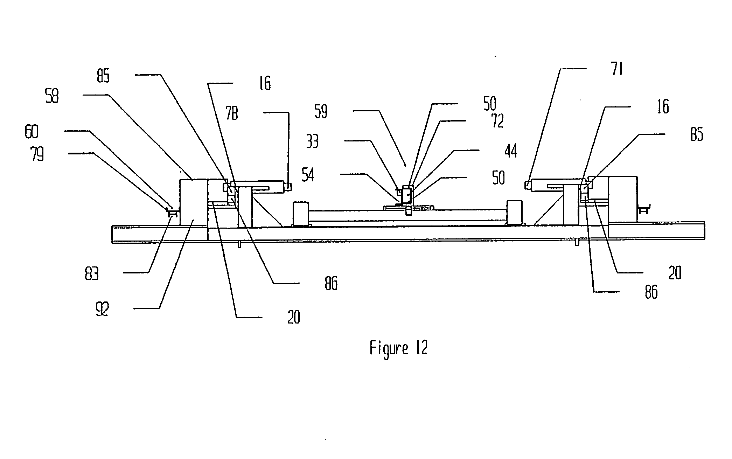

As seen in Figures **2****,** **3** and **4****,** the frame **19** has a pair of rear block assemblies **80** generally located at the rear end of the frame rails **16** of the vehicle **13** and are fixably attached to the chassis **9.** Each rear block assembly **80** consists of a slide arrangement **8** that is designed to evenly distribute the load of the movable frame **11** during loading and unloading, and to distribute the overall weight of the loaded moving frame away from the sprockets **12** during the loading and unloading process. As best seen in Figures **3** and **4****,** the axle **14,** the sprocket **12,** the elevatable support **17** and the slide arrangement **8** are co-axially arranged, ensuring the vertical alignment of the elevatable support rail **44** with the receiver **72** (Figure **12**) while the slides **8,** rails **16** and the frame rails **58** assume lateral alignment.

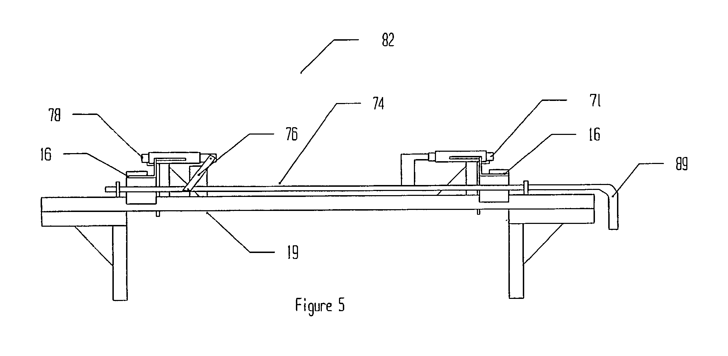

At the front end of the stationary frame is a locking pin assembly **82.** As best seen in Figure **5****,** the assembly **82** provides a manual positive lock system when the movable frame **11** is fully loaded on the stationary frame **19** and is a safety feature that prevents movement of the movable frame **11** into the cab of the vehicle during an accident. A rod **74,** is attached to a first locking pin **71** and second locking pin **78,** adjacent a handle **89.** The first pin **71** is moveable in the same direction as the rod **74.** The second pin **78** is positioned away from the handle **89** and is attached to a fulcrum plate **76** which reverses the direction of the rod **74** during operation. As the rod moves in a first direction, the first pin **71** moves in the same direction, whereas the pin **78** moves in a second direction.

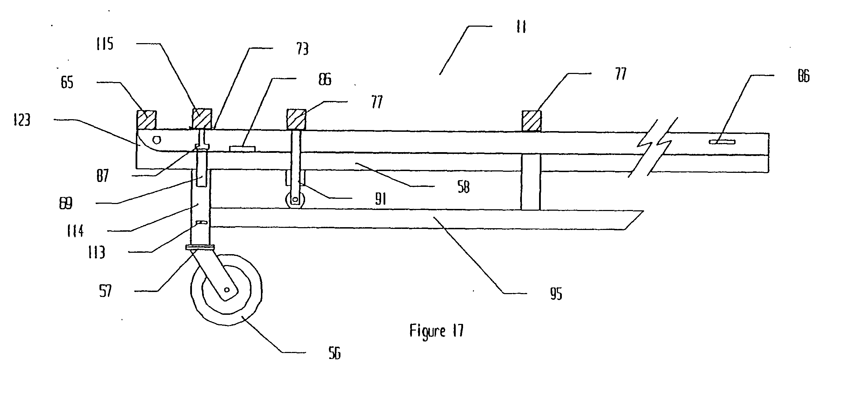

As best seen in Figures **3****,** **4****,** **6****,** a pair of stop plates **81** in the rear block assembly **80,** act as collision impact buffers to prevent the movable frame **11** from damaging the vehicle body when a movable frame stop plate **67** abuts the stop plate **81.** Furthermore, the stop plates **81** and **67** allow precise location of the movable frame **11** on the frame **19** and also allows for precise alignment of the locking pin assembly **82** (see Figures **4****,** **5** and **12**) on the frame **19** with a plurality of lock pin holes (shown in Figure **17** as the unmarked circle below cross member **65)** on the movable frame **11.** Slide **8** on the rear block assembly **80** are coated with the UHMW **45** that acts as a lubricant to assist the movable frame as it slides over the rear block **80**.

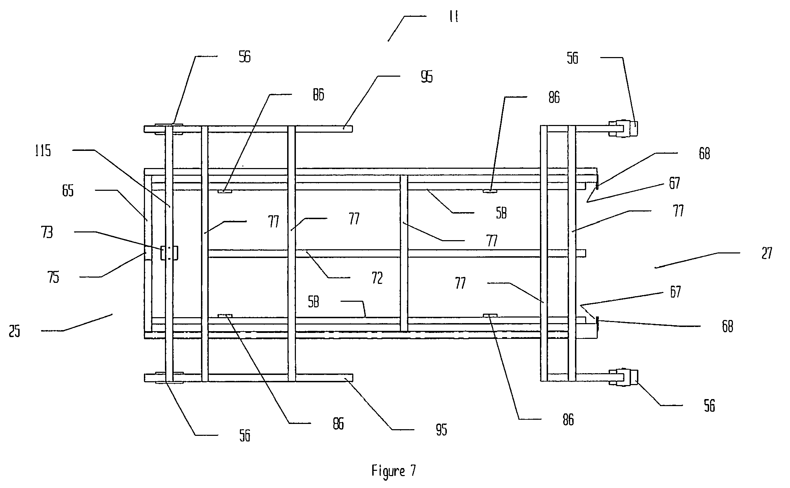

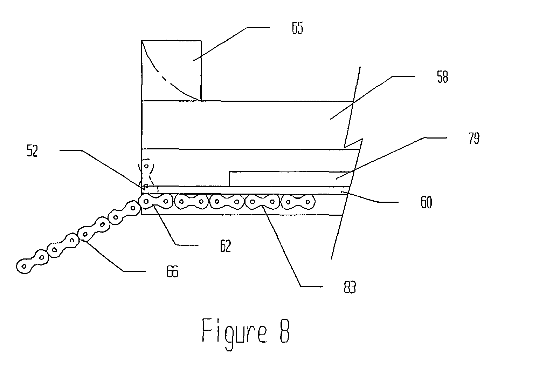

The rear block assembly stop plates **81** are positioned rearward of the axle **14** yet forward of the most rearward teeth of sprocket **12.** As seen in Figures **1****,** **7****,** **8** and **17****,** this allows a cross member **65** and a front portion **25** of the rail **58** to be unobstructed by the stop plate **81** when lifting or lowering moveable frame **11** when tag chains **66** and or links **62** are engaged on teeth of sprockets **12.**

With the moveable frame **11** tilting backward, the front of the receiver **72** tilts up, and with the receiver **72** and the slide rail **44** interlocked, the elevatable support **17** also moves up. The elevatable support **17** in turn pulls on the arms **15** by an arm pin **48.** In turn, the arm **15** pulls on the hinge pin **47** in turn pulling the lower arm **37** up with the lower end of the arms **37** connected to the sub frame cross member **51** with a hinge pin **49.** The arms **15** and **37** hinge open with hinging taking place on the hinge pin **47**. This action extends the hydraulic cylinder **46** as the ram **41** is connected to the arm **15** through the upper cylinder pin **39** and the barrel of the cylinder **42** is connected to lower arm **37** by a lower cylinder pin **51.** An operator can allow the moveable frame **11** to tilt without further forward and rearward movement if frame **11** is in an unbalanced condition.. In alternative embodiments, controls and sensors may be used to sense the angle of the oncoming movable frame **11.** A signal from a sensor may then be used to align the angle of the elevatable support with the angle of the oncoming frame. The movement of the elevatable support may be accomplished with the use of hydraulics or other types of actuators. In this way, the invention provides alternative mechanisms by which movement of the movable frame **11** powered by the drive **12** adapts the angle of the elevatable support **17** so that the elevatable support slidingly engages the movable frame **11.**

Referring to the Figures, the movable frame **11** comprises a "skeleton body" type frame with a pair of longitudinal rails **58** which act as slides so as to guide the rails **16** on the frame **19.** Disposed between, and parallel to, the rails **58** is the receiver **72** which is positioned across the under side of a plurality of cross members **77** and along a portion of the frame **11** length. Mounted to the frame is the load **100** and a set of removable wheels **56** to allow movement. Those skilled in the art will recognize that other means for moving the frame **11** are available to implement aspects of the invention, for example, skid plates. The movable frame **11** has a front end portion **25** and a rear end portion **27.** The front end portion **25** is disposed toward the rear of the stationary frame **19** during initial maneuvering. The load **100** is attached to frame **11** with the front portion **25** of the box **100** positioned rearward of the front portion **25** of frame **11.** This positioning allows the movable frame **11,** when one or off-loading, to be lifted or lowered without the box **100** contacting the tag connector chains **66** or the sprockets **12.**

As illustrated, frame **11** may have a tag connector chain **66** that is attached to a roller chain **83.** The roller chain **83** is fixably attached to a roller chain frame **60,** which in turn is fixably mounted to the frame **11.** With the movable frame resting on level ground, the vertical distance between the bottom face of the portion of rail **58** that slides on-the top of slide **8** and the bottom of the roller on roller chain **83** is equivalent to the distance between the radiuses of slide **8** and bottom of valleys, between the teeth, of sprocket **12.** These equivalent measurements allow the frame rail to slide over slide **8** and the rail **58** and slide **8** support the heavier loads. The curved nose **123** of the front portion of rail **58** that slides over slide **8** is curved to allow the rail **58** to slide over slide **8** when initially loading a heavily loaded frame **11.** A first link **62** of the chain **83** is positioned adjacent lips **52** that are supported on the frame **11.** The lips **52** forwardly protrude from the roller chain frame **60** and over the top of the side plates of the link **62** and prevent the over stressing of the side plates. This reduces the possibility that the side plates may break during the lifting or lowering of the front portion **25** of frame **11.** One skilled in the art will recognize that the side plates are not designed for excessive force **90** degrees to the chain side plate. The tag connector chain **66** has an unattached end portion **63** that enables an operator to guide the tag connector chain **66** onto the sprockets **12** of the frame **19.** The sprockets **12** are positioned such that the unattached end portion **63** of the chain **66** can be engaged on the sprockets without hindrance from other components. When the sprockets **12** are turned by the axle **14,** the tag connector chain **66** is pulled tight in the direction of the wheels' rotation and serves to pull the loaded frame **11** toward and up onto the first frame **19.** When not in use, the tag connector chains **66** are pivoted up and back on to the top of roller chain frame **60.** This advantageously protects the chain from damage. There is a corresponding storage track **84** on the frame **19** which also acts as a housing for tag connector chain **66** when the frame **19** is fully loaded with the movable frame **11.**

Referring to the Figures, a plurality of disposed tie-down brackets **85** on the frame **19** permit locking of the movable frame **11** to the frame **19** in the final loaded position. Disposed towards each of the four corners of the movable frame **11,** the tie-down brackets **85** lock the movable frame **11** to the frame **19** to prevent vertical movement of the movable frame during motion of the vehicle over uneven ground. The movable frame **11** has a plurality of tie-down brackets **86** that cooperate with the tie-down brackets **85** on frame **19.** The forwardly disposed frame brackets **85** and **86** are positioned lower than the rearwardly disposed frame brackets **85** and **86** to allow the forwardly disposed frame brackets **86** on the movable frame **11** to slide under the rearwardly disposed brackets **85** of the frame **19** during the initial loading. In the final loaded stage, the brackets **86** are positioned directly under the corresponding stationary frame brackets **85.** Advantageously, the brackets eliminate excessive noise between frame **11** and frame **19** when the vehicle is operating and also has the safety advantage of preventing a roll over of the movable frame **11** when loaded on the frame **19.**

The movable frame **11** has wheels **56** on the frame **11** so that frame **11** can be moved relative to the stationary frame **19** prior to engagement. The wheels **56** are removable when the wheels are off the ground. The wheels **56** removed by removing the hitch pin **113** from pin hole (not shown) in wheel support tubing **114** and allowing the shaft of front wheel frame **57** to drop down out of the movable frame wheel support tubing **114,** then replacing hitch pin **113** in pin hole. The vehicle **13** may be maneuvered to align to moveable frame, such that if the wheels **56** are used on the rear of the movable frame **11,** they are aligned such that they track straight and parallel to the lines of the movable frame rails **58.** This wheel alignment encourages the movable frame **11** to remain in alignment with the frame **19** when loading and off-loading.

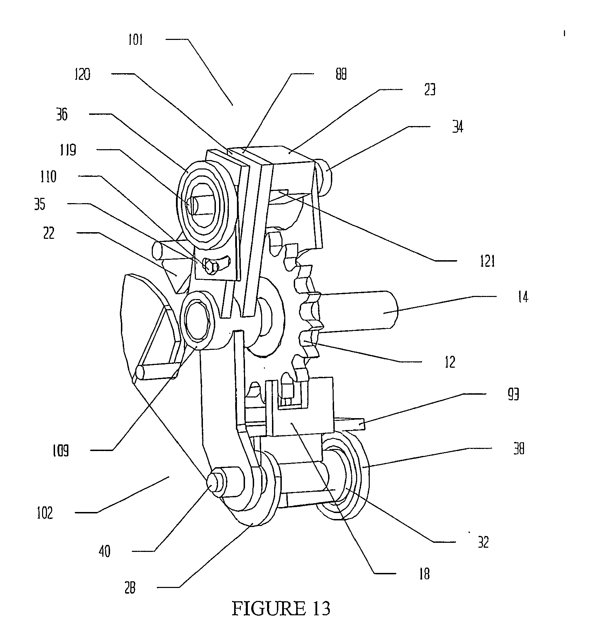

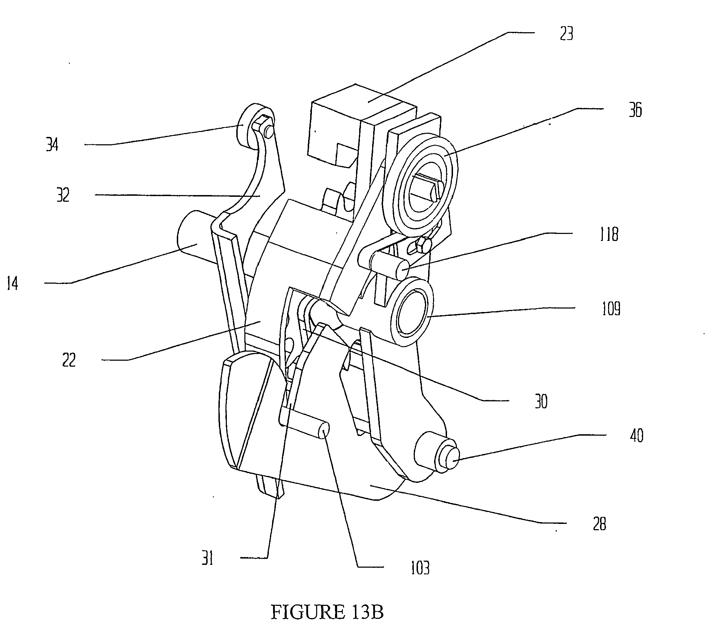

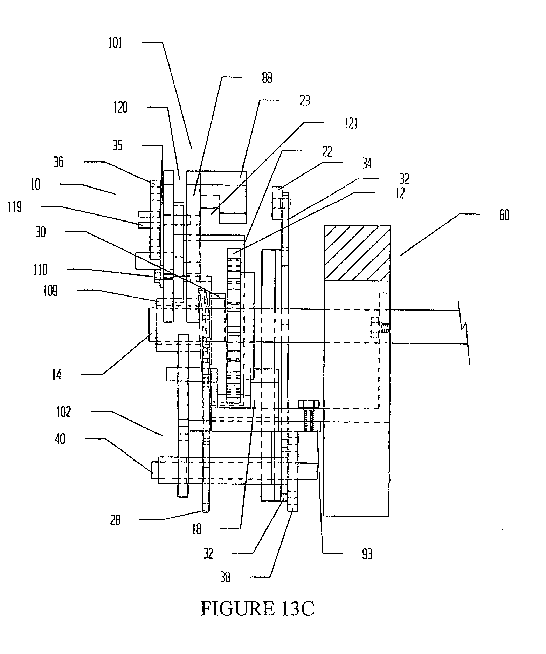

Referring to the Figures, a pair of chain locking systems **10** may be rearwardly mounted on the frame **19** and adjacent the rear wheel of the vehicle. Each of the chain locking systems **10** may comprise a sprocket **12,** a movable shoe arm **22,** a movable shoe arm **26,** a sensing plate arm **32,** a locking arm **28,** a support member **88** and a pair of main springs **36** and **38,** attachment bracket **93,** slot **120,** bolt **110,** spring tensioning plate **35** and pin **119.** The support member **88** has a first end portion **101** and a second end portion **102** and is fixably attached by attachment bracket **93** to the chassis frame **9.** The first end portion has a slot **120** best seen on Fig. **13A,** **13B****,** **13C****.** Fixably attached to the first end portion **101** by a bolt **110** is the adjustable spring tensioning plate **35** and fixably attached to the spring tensioning plate is a pin **119.** The pin **119** has two ends and each end projects from the side spring tensioning plate **35.** The first end has a slot in the pin that the spring **36** is fixably attached to and the second end is positioned as a pivot for arm **22** with arm **22** positioned in slot **120.** The center portion of the support member **88** is a bushing **109** that encases the circumference of the axle **14** adjacent the outer end. The support member **88** allows axle **14** to rotate inside the bushing **109** additionally supporting axle **14** by chassis **9** when the front end portion **25** of the movable frame is being lifted during initial loading.

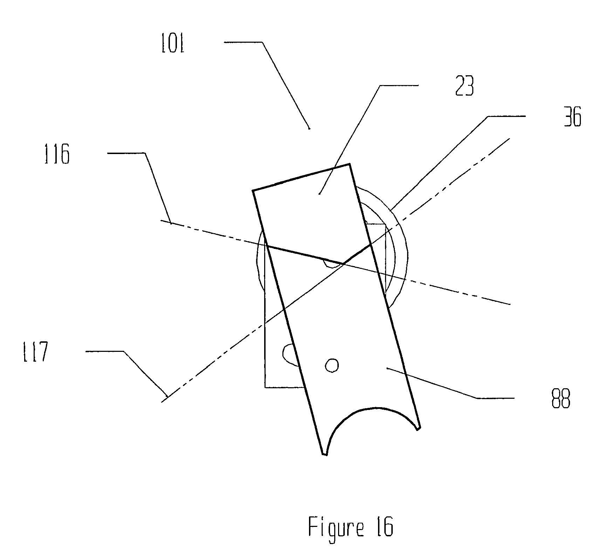

The support member **88** allows the axle **14** to rigidly support a stationary shoe **23.** Should the movable frame **11** rise, the roller chain frame **60** will rise up to the stationary shoe **23** thereby keeping the chain **83** engaged with the sprocket teeth **12.** The stationary shoe **23** is advantageously placed and shaped so that it maintains the tag connector chain **66** or the roller chain **83** on the sprocket. Referring to Figure **16****,** the stationary shoe **23** may be positioned at an imaginary intersection point that is defined by the tangential angle of contact between the movable frame and the sprocket. This placement allows the movable frame **11** to maintain a maximum angle during loading, as shown by a pair of tangent lines **117** and **116.** The stationary shoe **23** is also shaped so that it follows these tangent lines and this allows the movable frame **11** to rotate through all desired angles on the sprocket. In this way, the stationary shoe **23** prevents the tag connector chain **66** and the roller chain **83** from skipping off teeth on the sprocket **12** by allowing minimum clearance between the stationary shoe **23** and the sprocket **12.** The stationary shoe **23,** with the combined strength of axle **14** and the support **88,** the frame **11** and a frame attachment bracket **93,** may prevent the movable frame **11** from rolling sideways off the vehicle should the other mechanisms fail.

Referring to Figures **13A,** **13B****,** **13C****,** the sensing/locking arm shaft **40** is rotatably mounted on the second end portion **102** of the support member **88.** The locking arm **28,** the sensing plate arm **32** and the main spring **38** are co-axially and fixably attached to the shaft **40.** Those skilled in the art will recognize that the sensing plate arm **32** and locking arm **28** could be manufactured from a single plate. The outer coil end of spring **38** is fixably attached to attachment bracket **93.** The movable shoe arm **22** has a first end portion and second end portion. The first end portion of the shoe arm **22** is urged towards the chain and the second end portion is pivotally attached to the first end portion in slot **120** of the support **88** by pin **119**.

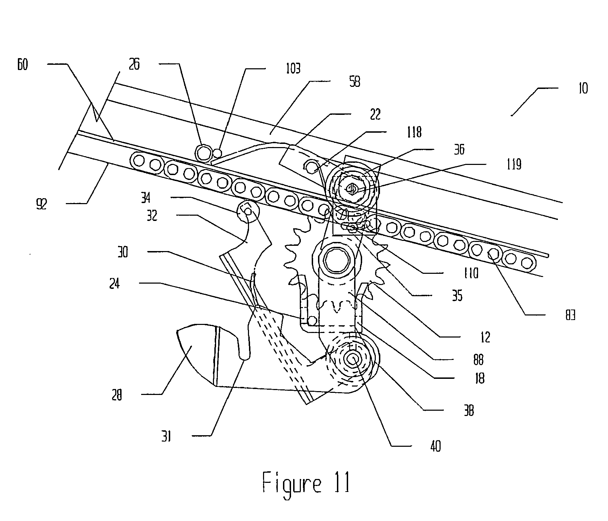

Referring to the Figures, the moveable shoe arm **22** has a projection **103** that extends outwardly therefrom. The movable shoe **22** has a second projection **118** and fixably attached to this projection is the outer coil of the spring **36.** The locking arm **28** has a first end portion and a second end portion, the second end portion being fixably attached to the first end portion of the shaft **40** (Figure **13A,** **13B****,** **13C**). Furthermore, the locking arm **28** has a groove **31** that is machined into the body. The groove **31** is shaped so that when the shoe **22** and the arm **28** are sprung into a closed position, the groove **31** co-operates closely with the projection **103** on the shoe arm **22.** The arm **28** also has a tab **30** that is shaped such that it pushes chain **66** off of the sprocket **12.** The tab **30** also redirects the chain **66** back onto the teeth of sprocket **12.** The sensing plate arm **32** has a first end portion and second end portion. The first end portion of the sensing plate arm **32** has a bearing **34** attached thereto and is urged upwards against the bottom side **92** (Figure **11**) of the movable frame rails **58.** The second end portion of the sensing plate arm **32** is fixably attached to the centre portion of the sensing/locking plate shaft **40.** The invention thereby provides a locking system that includes the sensing plate arm **32** adapted to contact the movable shoe arm **22** to lock the movable shoe arm **22** into position to keep the flexible connector **66** in engagement with the drive **12.** The sensing plate arm **32** may be movable by the movement of the movable (or second) frame, when driven by the drive **66,** to displace the sensing plate arm **32** to release the movable shoe arm **22** so that the movable shoe arm **22** may be displaced by the second frame **11** to release the flexible connector **66** from the drive **12.** It will be seen that the sensing plate arm **32** is operably connected through locking arm **28** to tab **30,** which is shaped to prevent the flexible connector **66** from engaging a second portion of the drive **66,** in cooperation with the movable shoe arm **22** being positioned to keep the flexible connector **66** in engagement with a first portion of the drive **12.** In alternative embodiments, controls and sensors may be used to move independently, or in any combination, the following components: the shoe arm **22**, the locking arm (28) and the tab (30). For example, electrical or hydraulic sensors may be used to move the component or components so that the component or components are displaced in response to movement of movable frame **11.** For example, sensing plate arm **32** could be an electrical switch or a small hydraulic cylinder, which when displaced by movable frame **11** sends oil to another cylinder that opens the lock **10.**

The movable shoe arm **22** spring tensioning can be adjusted by turning the bolt **110** to loosen the spring tensioning plate **35** and then swivelling the plate which in turn turns the centre of the main spring **36.** A front release fork **24** prevents the tag connector chain **66** from wrapping around the sprocket **12** during the initial chain engagement. A rear chain release fork **18** prevents the tag connector chain **66** from wrapping around the sprocket **12** after the movable frame **11** is lowered to the ground but before the sprockets **12** allow the tag connector chains ends to drop to the ground.

In an alternative aspect, the invention provides a loading apparatus for a vehicle, the apparatus including: (**1**) a first frame with a drive, such as stationary frame **19** with sprocket **12;** (**2**) a second frame having a flexible tensionable tag connector mounted on it for removably connecting the second frame to the drive, such as movable frame **11** with chain **66** (or alternative flexible tensionable connector tags such as a coil chain or cable) and, (**3**) a locking system for releasably guarding the flexible tag connector in operable engagement with the drive, such as chain locking system **10** mounted on stationary frame **19** for locking chain **66** into releasable engagement with sprocket **12** (by locking it is meant merely that the mechanism helps to prevent disengagement of the chain from the sprocket, by acting as a guard). The system may for example have a movable arm positioned to guard against disengagement of the connector tag connector from the drive, such as movable shoe arm **22.** A second arm member, such as sensing plate **32,** may cooperate with the first arm as components of the locking system by being movable between a generally closed position in which the locking mechanism acts to ensure the engagement of the flexible tag connector with the drive, and a generally open position in which the drive is free to cooperate with the movable frame without engaging the tag connector. The system may for example be configured such that in the generally closed position, the tag connector chain **66** engages the drive wheel **12** in a first position, with the movable shoe arm **22** positioned over the tag connector chain **66,** so that the movable shoe arm would prevent the tag connector chain from becoming disengaged from the sprocket **12.** In the closed position, sensing plate **32** may be urged into an open position in which a tab, such as tab **30,** to which the sensing plate is operably connected acts to help ensure that the chain becomes disengaged from the sprocket at an appropriate position. The sensing plate **32** may be urged into the open position by the movable frame **11** during movement onto stationary frame **19** and this action may move the locking plate to an open position while the tab **30** is moved to help ensure the chain becomes disengaged from the sprocket **12.** The sensing plate **32** may also be operably connected to a locking arm **28,** so that in the closed position the locking arm engages the shoe arm **22** to hold the shoe arm **22** in the closed position. The lock mechanism may be movable to an open position when the movable frame is driven onto the stationary frame. In the generally open position, the movable frame may engage the drive wheel independently of the tag connector chain. The sensing plate **32** may be adapted to engage the movable frame as the movable frame travels onto the stationary frame so that the sensing plate actuates the disengagement of the locking arm **28** from the shoe arm **22,** leaving the shoe arm **22** free to move out of the closed position so that the tag connector chain **66** is released from engagement with sprocket **12.** In this way, the locking arm, shoe arm and sensing plate arm are urged into an open position as the movable frame is displaced by the drive on the stationary frame.

In one aspect, the invention provides parrallel drive systems consisting of spaced apart drives **12** at the rear end of the stationary frame **19** that cooperate with the flexible connection **66** to the movable frame **11.** The spaced apart parallel drives **12** may be engaged with the flexible connections **66** to the movable frame **11** so that operation of the drives **12** ensures that the movable frame **11** is aligned with the stationary frame **19.** For example, as illustrated, tag chains **66** connecting the movable frame **11** to each of two spaced apart parallel drives **12** on the stationary frame **19** may be set on drive sprockets **12** in a timed position (such as equidistant from movable frame **11**), so that activation of the drive sprockets **12** results in alignment of the movable frame **11** with respect to stationary frame **19.**

During final engagement of the movable frame **11** with the frame **19,** a pair of stop plates **68** at the rear end portion **27** of the moveable frame **11** abuts a pair of stop plates **81** in the rear block assembly **80.** Advantageously, the stop plate face **68** is also covered with UHMW **67** to prevent rubbing noise of metals when the vehicle is moving.

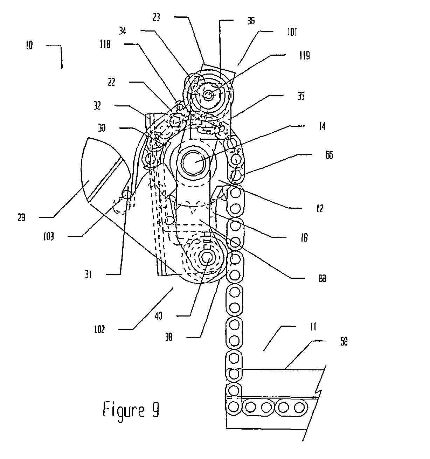

In one aspect, the present invention provides alternative methods of using the apparatus of the invention, described below with particular reference to Figures **1****,** **3****,** **4****,** **8****,** **9** and **11****.** With the movable frame **11** positioned on the ground the operator backing the vehicle **13** up to the movable frame **11.** The tag connector chain **66** is placed onto the sprocket **12.** The tag connector chains **66** are aligned to the rear of the stationary shoe **23** so as to line the end portion **63** of the chains in the same clock position on the sprockets **12.** The operator activates the motor **94** from an electrical control box (not shown) which releases an integral motor brake and begins rotation of the axle **14.**

As the sprockets turn, the tag connector chain **66** tightens and the front-end portion **25** of the movable frame **11** begins lifting off of the ground. At this point, the weight of the movable frame **11** is distributed between both of the rear wheel assemblies **56**, the ground, the two tag connector chains **66** and the sprockets **12.** The tag connector chain lifting force is transferred (at an angle such as **90** degrees) to the first link **62** of the roller chain **83.** Each sprocket **12** may have about **180°** of contact with the tag connector chain **66,** to provide sufficient contact to allow safe lifting or lowering of the movable frame **11.** At this stage, the front release fork **24** prevents the tag connector chain **66** from wrapping around the sprocket **12.**

The chain **66** begins lifting the weight of the movable frame **11.** The tag connector chain locking mechanism may be adapted to remain in place until the weight of the loaded movable frame **11** is supported by the rear block assembly slide 8. This advantageously reduces the risk of the tag connector chain **66** slipping off the sprocket **12** and dropping the loaded movable frame **11.** The tag connector chains **66** are inhibited from working off the sprockets **12** by the movable shoes arms **22** that are positioned above and adjacent to the sprocket **12** and may be held in position by the locking arm **28.** The tag connector chain locking mechanism is a positive tag connector chain-to-sprocket locking device that helps to hold the tag connector chain **66** on the sprockets **12** when the locking mechanism is in a closed position, and the locking arm **28** may act to hold the locking mechanism in this closed position.

During the mounting phase of the operation, the movable frame **11** continues being pulled up and forward towards the frame **19** with two tag connector chains **66** and two roller chain links **62** now in contact with sprockets **12.** The two frame rails **58** begin to slide over the slides **8.** The frame rails **58** and slide **8** take the weight of the front of the movable frame **11,** which removes the weight off the tag connector chain **66,** the roller chain frame **60,** sprocket **12** and drive axle **14.**

Advantageously, as the movable frame **11** moves further forward, the roller chain frame **60** moves under the stationary shoe **23** thereby retaining the movable frame **11** against tipping or rolling off sideways, and retaining the roller chain frame **60** from lifting up to a point where the chain links could slip a tooth on the sprocket **12.** This helps to ensure that the movable frame **11** cannot fall back off the slides **8.** This guide system of frame rails **58,** slide **8** and rails **16** helps to maintain the movable frame **11** in a straight line with the stationary frame **19.**

At this stage, the operator may remove the wheels **56** at the front of the moveable frame **11** to prevent them from interfering with the vehicle tires **29.**

The vehicle **13** may have two essentially identical locking systems **10** mounted rearwardly. The front-end portion **25** of the rail **58** contacts the sensing plate arm **32** and pivots the sensing plate arm **32** forwardly and downwardly. The sensing plate arm **32** rotates the shaft **40** against the spring tension of the main spring **38.** Rotation of the shaft **40** also pivots the arm **28** forwardly and downwardly. The groove **31** in the arm **28** pivots clear of the projection **103** on the movable shoe arm **22,** thereby releasing the movable shoe arm **22.** As the movable frame **11** continues advancing, the sensing plate arm **32** continues to pivot downwardly, which in turn rotates the shaft thereby moving the arm **28** further forwardly and downward and increasing the tensioning of spring **38.** The arm **28** pivots forward and down with the tab 30 on the arm **28** pushing the tag connector chain **66** forward and off the teeth of the sprocket **12.**

Methods other than the sensing plate arm **32** may be used to sense the frame **11** when loading or off-loading and to activate the locking plate **28.** This timing and activation may for example be accomplished electrically by the use of limit switches that sense a lower portion of the surface **92** of the rail **58** and in turn the limit switches may control the operation of an electric or mechanical solenoid or small gear motor that closes or opens locking plate **28.**

As the chain **66** is being pushed forward off the sprocket **12,** the chain **66** contacts the movable shoe arm **22** which is still in a closed position. The forward advancement of the chain **66** pushes the movable arm **22** forward and open, which overcomes the force of the spring **36.** The tab **30** of locking arm **28** pushes the tag connector chain **66** forward and off the teeth of sprocket **12** and tab **30** holds the chain forward and away from the sprocket **12,** to help prevent chain **66** from wrapping around sprocket **12,** and in turn the chain **66** holds movable shoe arm **22** forward and up. With the front of movable frame rail **58** still moving forward, the movable shoe arm **22** is lifted by the roller chain frame **60** on the side of the frame rail **58** as the roller chain frame **60** slides under the movable shoe arm **22.** The movable shoe arm **22** is lifted by the forward sliding action of the roller chain frame **60** and movable shoe **26** rests on the top of the frame **60** as it moves forward. With the frame rail **58** still advancing, the rail **58** slides over the sensing plate arm **32** and bearing **34.** The bearing **34** rolls along the bottom side **92** of rail **58** for the remainder of the operation.

The tab **30** on the arm **28** holds the tag connector chain **66** forward and away from sprocket **12**, while the frame rail **58** advances. This prevents chain **66** from hanging or "welding" to sprocket **12** which could cause the chain **66** to wrap around sprocket **12** or otherwise prevent smooth operation of the sprocket **12.** With the continued forward movement of frame rail **58,** the tag connector chain **66** is moved forward and away from the tab **30,** so that it no longer is shown at the stage illustrated in Figure **11****.**

Advantageously, slot **31** is machined so that when the movable shoe arm projection **103** is in a locked position with the locking arm slot **31,** there is a space between chain **66** and adjacent movable shoe arm **22,** to lessen wear on chain **66,** while allowing movable shoe arm **22** to serve its function in helping to prevent chain **66** from disengaging sprocket **12.**

For operation of the chain locking system **10** in reverse, the process described above is essentially reversed. During rearward movement of the frame **11,** for example in the off-loading procedure, the main springs **36** and **38** urge the arm members **22** and **28** into a closed position when the loose tag connector chain **66** re-engages the sprocket **12.** The shoe **23** that is attached to the first end portion **101** of the support member **88** prevents the chain from skipping the teeth on the sprocket **12.** Furthermore, the stationary shoe **23** prevents body rollover when off-loading the movable frame **11** from the stationary frame **19.** In fully opened position, the stationary shoe **23,** together with arms **22, 28** allow the chain **83** to move freely with the sprocket **12.** As the movable frame **11** moves rearward with the tag connector chain **66** approaching the sprocket **12,** the tag connector chain **66** contacts locking arm tab **30.** The roller chain frame **60** begins to slide from under the movable shoe arm **22,** and the movable shoe arm **22** pivots down and contact the top of the tag connector chain **66** and tag connector chain **66** is pressured down against the tab **30.** With the sensing plate arm **32** following the contour of rail **58,** the tab **30** pivoting down and rearward and to the closed position allows the tag connector chain **66** to lay onto the teeth of the sprocket **12**. The tag connector chain **66** is urged on to the teeth of sprocket **12** by the spring-tensioned movable shoe arm **22.** With the tag connector chain **66** engaging on the sprocket **12** the groove **31** of the spring-tensioned locking arm **28** pivots over projection **103** on the moveable shoe arm **22** and the locking system is again closed and locked.

The stationary shoe **23** is positioned such that at any angle of loading, the shoe **23** acts as a secondary hold for the movable frame **11** to the stationary frame **19** and thereby positively locks the roller chain **83** to the teeth of sprocket **12.** The stationary shoe **23** also acts as a secondary hold of the tag connector chain **66** to the teeth of sprocket **12** during lifting and lowering of the front end portion **25** of the movable frame. Advantageously, if the locking system **10** were to fail or a load was loaded or off-loaded with the system unengaged, the tag connector chain **66** would still be secured by the stationary shoe **23.**

Referring to the Figures, with the frame **11** still moving forward and the rear wheels **56** still on the ground, the movable frame cross member **65** moves over the elevatable support **17.** With the rearward portion of the elevatable support **17** rotably attached to the axle **14,** and if the forward portion of the UHMW **50** on top of slide rail **44** is too high for slot **75** to clear, the slide rail **44** will be pushed, in turn pivoting the elevatable support **17** down by the slot **75** and by the weight of the movable frame **11.** A lift plate **87** enters the rearward disposed end of the channel **54** and alignment plate **73** slides over top of the slide rail **44.** If the slide rail **44** is still too high, the alignment plate **73** pushes on the slide rail **44** and the elevatable support **17** pivots further down. If the elevatable support **17** is low, the lift plate **87** slides along the inside top lip of the channel **54** and lifts and pivots the elevatable support **17** upwardly as the movable frame moves forward. The lift plate **87** slides along and under a tapered internal ramp **33** and lifts and pivots the elevatable support **17** higher. With the elevatable support **17** height finely adjusted, the rail **44** aligns with the receiver **72.** The movable frame **11** slides further forward and the front portion of the receiver **72** slides and interlocks over the rear disposed portion of the elevatable support rail **44,** that is coated with UHMW on both sides. With further forward movement of the movable frame **11** receiver **72** slides further forward over the rail **44.**

The elevatable support guide system **59** along with the slot **75,** the lift plate **87** and the alignment plate **73** allow various lengths of frames to be loaded on the same stationary frame. When the frame **11** is off-loaded the elevatable support **17** maintains this angle. When a different length of frame **11** is on-loaded the angle of loading changes. The elevatable support may be re-adjusted by the above components allowing this new receiver to align with the elevatable support with no manual labor required.

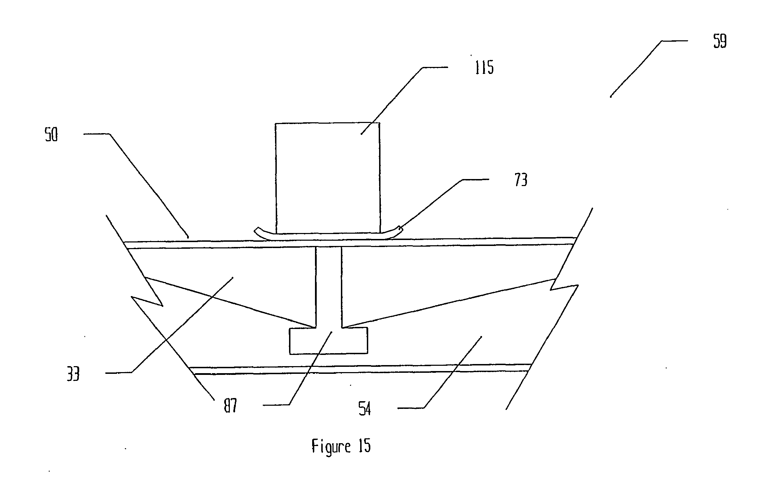

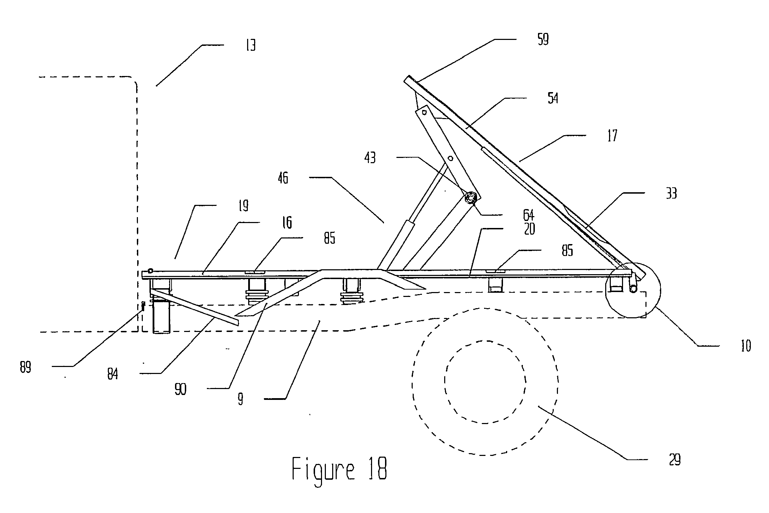

As seen in Figures **6****,** **15****,** **18****,** **19** and **21****,** the movable frame **11** is balanced above the rear block assembly slide **8** whereupon only the slides **8** on rear block assemblies **80** are in contact with rails **58.** The receiver **72** is interlocked with the rail **44** and the movable frame rails **58** are straddling the rear portion of the stationary frame rails **16**. As the movable frame **11** is moved forward so that the center of gravity and weight is passed over the slides **8,** the weight is transferred from the rear wheel assemblies **56** to the elevatable support **17.** The elevatable support **17** allows the weight to drop down onto the stationary frame **19** in a controlled manner by the resistance of the hydraulic cylinder **46,** flow restrictors and valves. The movable frame **11** is eased down onto the stationary frame **19** with the movable frame rails **58** resting on top and straddling the rails **16,** thereby preventing lateral movement of the movable frame **11** when travelling (Figure **12**). The tag connector chains **66** are pulled up onto the storage tracks **84** as the movable frame **11** continues forward. The storage area on top of roller chain frame **60** is only used when the movable frame **11** is off the vehicle **13.**

One skilled in the art will understand that the storage track **84** may be omitted. The top of roller chain frame **60** along with side bar **79** on the movable frame **11** may be used in place of storage track **84.** The side bar **79** makes a storage track for tag connector chain **66.** The bar **79** moves through the stationary shoe groove **121** (Figure **13A****,** **13B****,** **13C**) when movable frame **11** is loaded or off-loaded. This track may be necessary when loading and off-loading because when the movable frame **11** is moving on top of the stationary frame, the hanging tag connector chain **66** may catch, or hang up, on the vehicle suspension on parts of chassis **9.** In loading the operator may be required to manually place the tag connector chain **66** into the storage track roller chain frame **60.** In off-loading, the tag connector chain **66** may be removed from the top of the roller chain frame **60** by the movable shoe arm **22.** With the movable shoe arm **22** on the top of roller chain frame **60** the shoe **26** pushes the tag connector chain **66** off of the roller chain frame **60** as the movable frame moves in rearward direction.

As best illustrated in Figures **1****,** **2****,** **5****,** **6****,** **11****,** **12****,** **17** and **21****,** the stop plates **68** prevent the movable frame from being pushed forward into the cab of the vehicle **13**. Advantageously, the stationary shoes **23,** the movable shoe arms **22** the rear upper tie down brackets **85** and' the rear lower tie down brackets **86,** the receiver **72** and the elevatable supports **17,** are so configured that they prevent the movable frame stop plates **68** from lifting over the stop plates **81** in an accident. The manual locking mechanism **82** is used to lock the movable frame **11** in the loaded position. Moving the handle **89** into the locked position causes the pins **71** and **78** to move into the locking pin holes in movable frame **11.** A locking pin hole is shown in Figure **17** as the unmarked circle below cross member **65.**

In order to remove the movable frame **11** the same procedure is used except that the motor **94** is activated in the reverse direction.

The movable frame **11,** may have fender components that hang lower and in front of the rear vehicle tires **29.** The ramp system for on and off-loading of a fender body comprises a pair of lower fender slide frames **95,** a pair of slide posts **69** and a pair of roller posts **91** that are located on the movable frame **11.** A pair of ramps **90** are correspondingly located on the frame **19.** The frame components protect fenders **99** of the box **105** of the movable frame **11** when loading and off-loading. One skilled in the art will recognize that there are many types of fender bodies, for example, a standard fleet slide or step side pickup box body, a utility box body, and catering truck bodies, motor home bodies and passenger bodies as only a few.

The lower fender slide frames **95** protect the fenders **99** of the body. The fender slide frames **95** is slightly lower than the fenders **99.** The slide frame **95** is supported and attached to the movable frame cross members **115** and the cross members **77**. The lower fender frames **95** shown in work as a slide system that slides across the top of the rear tire **29** when loading or off-loading. The balance point of the movable frame **11** at the time of loading or off-loading determines if this slides **95** contacts with the tires **29.**

The slide posts **69** slide up or down the topside of the rearward angled portion of ramps **90.** The slide posts **69** are shorter than the roller posts **91** located forward therefrom on the frame **11.** The bottom end of shorter slide posts **69** is high enough to contact the top side of the sloped rear section of the ramps **90** when the frames **95** are sliding forward on the tires **29.** The front portion **25** and the roller posts **91** of the frame **11** is raised as the slide posts **69** slides forward and up the ramps **90**. The longer roller posts **91** are raised to a position where they contact the top sides of the sloped rear sections of ramps **90.**

The short slide posts **69** allow the most rearward end of the sloped section of ramps **90** to be high above the tires **29** allowing necessary clearance from tires **29** to ramps **90.** The longer roller posts **91** lifts frame **11** high enough so as to maintain necessary clearance between the front of the wheel wells **98** and the tires **29.** Depending on the weight, the balance point and the speed at which the frame **11** is on or off-loading, the setting of the controls of the hydraulic cylinder **46,** plus the vehicle chassis suspension, slide post **69** may or may not be used.

For off-loading, the slide posts **69** carries the movable frame **11** when the roller posts **91** roll off sloped rear section end of ramps **90** to a point where either gravity tilts the movable frame **11** up or the frames **95** contacts the tires **29.** The slide posts **69** could also be equipped with rollers.

The roller posts **91** carry the movable frame **11** as it rolls up and down the ramps **90** during loading or off-loading. The roller posts **91** carry the load weight at different time depending upon the weight, balance point and speed at which the frame **11** is on or off-loading, the setting of the controls of the hydraulic cylinder **46,** plus the vehicle chassis suspension.

By eliminating the rear sloped section of ramps **90** and extending the horizontal section of the ramps **90** rearwardly away from the rear of tire **29,** the slide post **69** and the lower fenders' slide frames **95** may be eliminated, providing the design of the vehicle chassis **9** is such that adequate clearance is maintained between the top of tires **29** and the ramps **90** when the vehicle is loaded and in motion. One skilled in the art would recognize that the balance point is such that the roller posts **91** would be positioned over the ramps **90** when the center of gravity of the fender body **105** is moved over the rear block assembly slide **8.**

If the fully loaded movable frame **11** begins to off-load, the roller posts **91** come into contact, rolling rearward and upward on the top side of the front angled portion of the ramps **90,** thus lifting the front portion **25** of the movable frame **11.** The rearward portion **27** of the rails **58** slide and pivot on the rear block assembly slides **8.** The movable frame **11** and the receiver **72** lifts the elevatable support **17** up as the receiver **72** slides along the slide rail **44.**

With the front portion **25** of movable frame **11** moving up, the front of fender walls **98** clear the top of the tires **29** and the roller posts roll along the horizontal section of the ramps **90.** The roller posts **91** rolls rearward and down the rear portion of the ramps **90**. With the roller posts **91** rolling to the end of the ramps **90** the shorter slide posts **69** contacts the ramps **90** and as the movable frame **11** is moved rearward the slide posts **69** slides rearward and down the ramps **90.** The front-end portion **25** of movable frame **11** continues moving rearward and down, the lower fender slide frames **95** contacts the top of the tires **29.** The weight of the front end portion **25** of the movable frame **11** is removed from the slide posts **69** and ramps **90** to the lower fender slide frames **95** and the top of the rear tires **29.** The frame sliding rearward with the weight of the front portion end **25** of the movable frame **11** on rear tires **29** and the weight of the rear end portion **27** of movable frame **11** on the rear block assembly slides **8** and with the receiver **72** sliding on the elevatable support rail **44,** the point of balance of the movable frame slides over the rear block assembly slides **8** and the front end portion **25** of the movable frame **11** tilts upward and rearward. With the receiver interlocked with the elevatable support rail **44** the tilting action lifts the elevatable slide support. The speed of lift action is controlled by the scissor arms **15** and **37,** the hydraulic cylinder **46** and its associated hydraulic flow controls and valves. The movable frame **11** tilting action occurs at the time the point of balance of movable frame **11** slides over the rear block assembly slides **8.** The tilting action timing varies depending on the distribution of the payload weight of the movable frame **11.** In on loading of the movable frame **11,** the procedure may be reversed.

Figures **22** through **36** illustrate a lift arm assembly of the invention which may be mounted on the stationary frame and adapted to releasably engage and move the movable frame, to position and hold the movable frame in a raised position. As shown in Figure **26****,** slide plate M**6** may be in sections with lift arm pins M**8** located between slide plate sections M**6** for engagement with the lift arm assembly. Lift arm pins M**8** and slide plates M**6** may be positioned in a wide variety of ways, for example to adapt the movable frame **11** for a variety of uses. In some embodiments, slide plate M**6** may be continuous with lift arm pins M**8,** and lift arm pins M**8** may be located below slide plate M**6.** One or more longitudinally spaced apart lift arm pins M**8** may be provided along slide plates M**6,** to allow lift arm A**7** to engage alternative lift arm pins M**8,** for example so as to tilt the movable frame **11** at alternative positions.

As shown in Figure **36****,** the top M**300** of the lift arm A**7** may be curved adjacent to the mouth of the lift arm head, thus allowing the lift arm A**7** to pivotally articulate about a lift arm axis on lift arm pin M**8** without binding against the slide plate M6 when the movable frame is raised or lowered with respect to the stationary frame rails M**9.** The top of the lift arm head may be adapted so that, with the front portion of the movable frame rails M**9** in contact with the stationary frame rails S**10,** the mouth of the lift arm aligns with a lift arm pin M**8** when the movable frame M**16** is moved forward. The distance between lift arm pin M**8** and the slide plate M**6** may be such that the long mouth plate A**14** and latch plate A**12** of the lift arm head will clear the slide plate M**6** when the lift arms A**7** are pivoted about the lift arm axis, raising or lowering the movable frame **11.** In alternative embodiments, alternative actuators of the lift arms may be provided, such as electric and/or hydraulic controls.

In one aspect, the invention provides a lift arm having a lift arm head adapted to engage lift arm pins when the movable frame is moving in one direction but not in the opposite direction. This adaptation of the lift arm heads may be used to facilitate tilting of the movable frame at or near its balance point on the stationary frame. In such embodiments, the movable frame may include a plurality of longitudinally spaced apart lift arm engagement pins M**8.** The lift arm head end may adapted to accept the lift arm engagement pins when the movable frame is being moved by the drive onto the stationary frame; and the lift arm head may be adapted not to accept the lift arm engagement pins when the movable frame is being moved off of the stationary frame.

To operate the lift arms, the drive may be actuated by an operator so that the movable frame M**16** moves rearwardly, with the movable frame rails M**9** sliding rearwardly on the stationary frame rails S**10.** The lift arm may be actuated from its stored position, for example by being lifted into position by manual rotation of the handle A**1.** The lift arm head then contacts the slide plate M**6,** and as the movable frame moves rearwardly a lift arm engagement pin M**8** may slide over lift arm A**7** pushing the lift arm A**7** down under spring tension until the lift arm pin M**8** passes the rearward portion of the lift arm A**7.** At this point the lift arm A**7** will spring back up and the lift arm top M**300** may again contact the slide plate M**6.** This action of successive lift arm pins passing over lift arm head will continue as the movable frame M**16** continues to move rearwardly. The rearward motion of the movable frame may be discontinued when it reaches a position at or near the center of balance of the movable frame M**16** on the stationary frame rails S**10.** In this position, the movable frame may for example exert pressure on the locked hydraulic cylinder **42** which may be detected to automatically discontinue the rearward movement of the movable frame, for example using a hydraulic pressure switch (not shown) attached to the port of the upper section of cylinder barrel **42** to sense increasing pressure in the cylinder. The drive may then be reversed so that the movable frame M**16** moves forward on the stationary frame. The movable frame M**16** may then move forward until the first lift arm pin M**8** is encountered by the lift arm head A**7,** at which point the lift arm pin enters the mouth A**400** of lift arm head. If this occurs with the movable frame close to its balance point, relatively little pressure may be exerted on lift pin M**8** and lift arm A**7** as the drive moves the movable frame forward to tilt it into the raised position as shown in Figure **25****.** In alternative embodiments, the lift arm A**7** may for example be activated with an air cylinder or spring system manually or mechanically (not shown).

In one aspect the invention may provide a mechanism for tilting the movable frame with respect to the-stationary frame using the lift arms, such as a double arm lift mechanism, attached to the stationary frame, as shown in Figures **22** through **36****.** The lift arm heads may have U shaped ends, as shown in Figures **22** through **25****,** and may optionally include a latching system that closes the opening of the U shaped end as shown in Figures **28** through **35****.** The movable frame may be adapted with pockets housing lift arm pins that are fixed to the movable frame, such as movable frame supporting a truck body or box section. In some embodiments of the lockable lift arm head, the open U-shaped lift arm ends may accept the lift arm pins in the U-shaped opening after which a latching plate closes the opening of the U shaped end and retains the lift arm pin in a housing loop. The lift arm head housing loop may be opened by a signal, which may for example be given automatically or by an operator when the weight of the movable frame system has been transferred so that the weight is not primarily on the lift arms.

Referring to figures **22** through **36****,** to activate the dump mechanism, handle A**1** may be rotated and locked into place by latch A**2.** This motion tensions lift spring A**3** and lifts the lifting arms A**7** up off rest plate S**4** and arms contact the bottom surface of rear slide plate M**6.** In alternative embodiments, the lift arm system may for example have one, two or more arms, whose movement may be coordinated.

With the lifting arm A**7** tensioned up and contacting rear slide plate M**6,** the hand held controller toggle switch, not shown, may be activated activating the drive, not shown, to slide the movable frame M**16** rearwardly on the stationary frame M**17.** As the movable frame slide rails M**9** slide rearwardly on the stationary frame rails S**10** the rear plate M**6** may slide against the top surface of short top plate A**11** of lift arm A**7.** Once the plate M**6** slides past the top plate A**11** of lift arm A**7** the lift arms may move upward under the spring tension of spring A**3** and the short top plate A**11** of slide arm A**7** may slide against lift pin M**8** that may be located in the forward portion of the movable frame. As the movable frame continues to slide rearward, pin M**8** may slide past the rearward end of short top plate A**11**.

The latching plate A**12** may be pivotally attached by pin A**25** to arm A**7.** Swivel collar A**28** may be pivotally attached to latching plate A**12.** As illustrated, rod A**29** may have two ends, A fixed collar stop plate A**50** may be attached to the first end of rod A**29** with the first end of rod A**29** slidably attached to the swivel collar A**28** with collar stop plate A**50** contacting the forward face of swivel collar A**28.** A double end compression spring A**30** may loosely surround rod A**29** with one end in contact with the rearward side of swivel collar A**28** and the other end in contact with stop plate A**32.** Stop plate A**32** may be fixed to end of rod A**29.** The second end of rod A**29** may be slidably attached to arm rod positioning plate A**31.** A double end compression spring A**13** may loosely surround rod A**29,** with one end in contact with rearward face of rod position plate A**31** and the second end that is in contact with spring stop plate A**33.** Spring stop plate A**33** may be fixable attached to rod A**29.**

There may be two pivot limiting stop plates A**26,** A**27** attached to latching plate A**12.** Both pivoting limiting stop plates A**26,** A**27** may be attached near the bottom edge and to the side of the latching plate A**12** that slides against the arm A**7.** One pivoting limiting stop plate A**26** may be fixed in a position so that when spring A**13** tensions latching plate A**12** upward the pivoting limiting stop plate A**26** contacts the bottom-face of bottom long plate A**14** when the latch plate is in the closed position. The second pivoting limiting stop plate A**27** may be fixed in a position so that when rod A**29** pulls swivel collar A**28** and swivel collar A**28** pulls on the latching plate A**12,** downward pivoting limiting stop plate A**27** contacts the bottom face arm A**7** when the latch plate is in the open position.

An outer cable A**34** may be fixed to the arm A**7** with one end of an inner cable A**36** attached to the plunger A**37** of solenoid A**39** and the second end of inner cable A**36** fixed to rod A**29.** In operation, the movable frame M**16,** as stated above, may slide to a position so that the pin M**8** is over the top surface of the mouth short top plate A**11**, at a point where the pin M**8** is past the rearward end of top mouth plate A**11**. The movable frame may continue moving rearwardly as the pin M**8** slides over and contacts latching plate A**12** with latching plate A**12** pivoting down as lift arm spring A**3** lifts lift arm A**7** up. With the lift arm A**7** lifting, the latching plate A**12** pivoting down adding additional tensioning to spring A**13.** The top surface of the long bottom mouth plate A**14** then contacts pin M**8.** In an alternative embodiment, with a fender body on the movable frame, the front portion of the movable frame may be lifted and supported up and off the stationary frame when the front fenders are over the rear tires. In some embodiments, with this type of body the operator may be required to stop the rearward motion of the movable frame when the top surface of the long bottom mouth plate A**14** contacts pin M**8** as stated above. The operator would then actuate the movement of the movable frame to move forward so that pin M**8** would slide along bottom mouth plate of A**14** toward the forward portion of the mouth of the lift arm A**7.** The remaining procedure for dumping of a fender body may be the same as a standard body. In some embodiments, with the lift arm A**7** lifting, the latching plate A**12** pivoting down adding additional tensioning to spring A**13,** the top surface of the long bottom mouth plate A**14** may then contacts pin M**8.**

In some embodiments, the rear end portion of front slide plate A**17** may contact lift arm A**7** as the pin M**8** contacts the long bottom mouth plate **14.** At this point, the operator may carry on or stop the rearward motion of the movable frame. If the rearward motion is continued, the pin M**8** may slide rearwardly past the end portion of the top edge of latching plate A**12** and past the rearward end of mouth plate A**14.** The latching plate may pivot upward, under the tension of the spring, to the closed position. The arm A**7** may continue to contact and slide on the rearward end of the front slide plate A**17.** The operator may now activate on-load movement, so the moveable frame movement stops the rearward motion and begins a forward motion. In this position the center of balance of the movable frame M**16** may be over the stationary frame.

With the continued forward sliding movement of the movable frame M**16,** the lift arm A**7** may continue to contact and slide on the rearward end of the front slide plate A**17,** and the lift pin m**8** may contact the rearward angled end A**18** of latching plate A**12.** The latching plate A**12** may pivot downwardly as latching plate angled end slides against pin **8** with the forward movement of pin **8.** At this time spring A**13** may be being compressed. As the movable frame M**16** moves forward the pin M**8** may slide latch plate M**12** down.

As the movable frame M**16** moves in a forward direction, pin **8** may slide over the rearward top edge of the latching plate A**12.** Latching plate A**12** may be in the open position, with the pin M**8** contacting the top surface of the long bottom mouth plate A**14**.

As the lift pin M**8** moves forward along the rearward portion of the top edge of the latching plate A**12,** the pin M**8** may slide forward of the rear end portion top edge of the latching plate A**12** and the latching plate A**12** may move upward to the closed position under the tension of spring A**13.** The movable frame pin M**8** may continue moving and to come into contact with the front closed end portion of mouth A**19.** In this position, the latching plate A**12** may be held in the closed position by the lift pin M**8** being in contact with the inside arced shape A**20** of the latching plate A**12** and by the tension of spring A**13.** The movable frame lift arm pin M**8** may be held within the closed loop formed by the lifting arm mouth top plate A**11**, arc A**19,** bottom plate A**14** and face A**21** of the latch plate A**12** in the closed position.

In some applications, when raising the front portion of the movable frame M**16,** a load supported by the movable frame may shift rearward on the movable frame M**16.** The balance point of the movable frame M**16** would then also shift rearward.-If the newly established balance point of the movable frame M**16** is rearward of the rear end of the stationary frame rails S**10,** the rearward end of the frame rails S**10** would be the fulcrum point and the rearward section of the movable frame M**16** will pivot down and the forward portion of the movable frame M**16** will pivot up and back.

With the movable frame lift arm pin M**8** held within the closed loop formed by the lifting arm mouth top plate A**11** arc A**19**, bottom plate A**14** and the latch plate face A**21** (with the latching plate A**12** in the closed position) the tilting action of the movable frame may be limited to the position when the pin M**8** contacts the surface A**21** of the latching plate A**12.** The latching plate may now be maintained in a closed position by pin M**8** contacting the arc surface A**21.** Should the solenoid be energized with pin M**8** contacting either face A**20** or face A**21** of latching plate M**12,** spring A**30** is compressed tensioning latch plate m**12** to open with latching plate M**12** maintained in the closed position by pin **8**. In an illustrated embodiment, for latching plate M**12** to pivot to the open position, face A**20** and face A**21** must clear pin M**8** when latching plate pivots on pin A**25.** For pin M8 to be in this position the lift arm A**7** and pin M**8** are in a non-weight bearing position. The weight of the movable frame M**16** is in a balanced position. This may be referred to as the system balance point.

With the movable frame pin M**8** contacting the forward closed end A**19** of the lift arm mouth, the movable frame may continue to move forward. The continuing forward horizontal motion of the movable frame M**16** on the stationary frame may pivot the lift arm A**7** and the lift arm A**7** may lift the forward portion of the movable frame. The forward portion the movable frame may lift in an arc with the pivot axis being the axle A**23** of the lift arm on the stationary frame. The force of the forward moving movable frame M**16** on the lift arm A**7** the forward force pushes and pivots the arm A**7** lifting the front portion of the movable frame M**16.** The forward motion may for example be continued to a position in which the movable frame M**16** angled stop plates M**24** contact the stationary frame angled stop plates S**25.** The front portion of the movable frame M**16** may move forward and upward or forward and downward when the stop plates M**24,**S**25** contact. This movement may be reliant on the positionof the lift pin M**8** with respect to the axle S**23** positioning on the stationary frame 5**42.** The operator may then de-energized the driver. With the driver de-energized, the driver may lock the movable frame M**16** against further movement.

In some embodiments, the highest elevation of the front of the movable frame M**16** may be reached at a point on a line drawn between the center point of the end of the lift arms axle A**23** and the center of the end of the lift pin M**8** where this line is **90** degrees to the movable frame rail M**9.** If the stop plates M**24**,S**25** contact when the front elevated portion of the movable frame is on the forward and downward or descending side of the lift arm A**7** arc, stress may be removed from the driver and rear drive axle and sprockets, not shown, by quick jogging of the drive motor in reverse.

In some embodiments, in either the ascending or descending position and in the fully forward position with the stop plates M**24**, S**25** in contact, the rear of the movable frame M**16** can not lift up and off the rear of the stationary frame S**42** or sprockets S**41** due to the movable slide rail M**9** and the angled movable stop plate M**24** are wedged outside and against the stationary frame rail S**42** and the stationary angled stop plate S**25.** For the movable frame M**16** to lift off the drive sprockets, the movable frame would first have to move rearward and secondly the movable frame M**16** upward movement would have to then overcome all the other mechanisms in place as described in the first application.

To lower movable frame, such as a dump box, the lift arm A**7** may be positioned so that the stop plates S**25,** M**24** contact when the pin M**8** is forward of the highest point of the arc of the lift arm A**7.** Rearward movement of the movable frame M**16** may be initiate by an operator, with the lift arm A**7** moving and lifting the front of the movable frame M**16** to the highest elevation and then lowering the front of the movable frame M**16** with the rearward motion. With the movable frame M**16** moving rearward and down the operator may for example depress a spring loaded push button switch, not shown, that is used to supply power to a latching plate open mechanism electrical circuit, not shown. With the button depressed the solenoid A**39** only becomes energized when the cam A**40** on the pivot axle A**23** contacts and closes the contacts on the limit switch A**41.** The cam A**40** may be fixed on the axle A**23** to activate the limit switch A**41** when the movable frame M**16** is in a position that is nearing horizontal and the front portion of movable frame rails M**9** are in close proximity with the stationary frame rails M**20.** With the movable frame M**16** nearing the horizontal position, the load will not likely change or move, therefore the balance point of the movable frame will not likely change or move and the locking plate A**12** may be opened once the load is in a balance position.

When the limit switch A**41** contacts close the solenoid **39** may be energized, the solenoid plunger A**37** may then be pulled into the solenoid **39** pulling and slidably moving the attached inner cable **36** inside the outer jacket A**34** of the two piece cable. The inner cable **36** may pull rod A**29** that compresses spring A**13** and spring A**30.** Spring A**30** may tension pivot collar A**28** that is pivotally attached to latching plate A**12** and latching plate A**12** is tensioned to pivot open. The latching plate A**12** may be maintained in the closed-position by the arced shape A**20** of latching plate A**12** and the lift pin M**8** positioning in the arced surface A**19** of the mouth of the lift arm. The lift pin M**8** may still be in the forward most position in the mouth of the lift arm and lift pin M**8** may still be supporting the movable frame M**16** in a lifted position. As the movable frame A**16** continues the rearward motion and the weight of the front portion of the movable frame on the lift pin M**8** and lift arm A**7** diminishes, so that the movable frame is at the system balance point.

The movable frame M**16** may continue sliding in a rearward direction, with the spring A**3** maintaining an upward tension on lift arm A**7** with lift arm A**7** in contact with pin M**8.** The pin M**8** may continue sliding rearwardly so as to slide away from the forward closed end A**19** of mouth of lift arm A**7** and along the top surface of the bottom mouth plate A**14.** The latching plate A**12,** under spring tension of spring A**28,** may pivot downward and surface A**20** may maintain contact with pin M**8** as pin M**8** slides rearward. Pin M**8** may slide rearwardly on bottom plate A**14** and latching plate A**12** may pivot downwardly to the open position. Pin M**8** may slide further rearward on the top surface of the bottom mouth plate A**14** to the end of plate A**14,** with pin M**8** sliding past plate A**14** the lift arm A**7** under spring tension of A**3** may pivot upward and contact front slide plate A**17**.

At this point, an operator may stop the rearward movement of movable frame M**16,** and the operator may release latch A**2** to allow handle A**1** to pivots to the right so that the lift arm A**7** pivots down and contacts stop plate S**4.** The operator may then activate drive so that the movable frame M**16** slides forward. If the front portion of the movable frame M**16** is in a raised balanced position, the movable frame M**16** lowers as the forward unbalanced weight of the movable frame overcomes of the forces of the elevatable support arm.

With the movable frame rails M**9** sliding forward on the stationary frame rails S**10,** the rear movable frame stop plates M**24** may contact the stationary frame plate S**25** so that the system is back into a position where the movable frame can be locked.

In alternative embodiments, the lifting and lowering operation of arm **7** by the operator may be automated, the operator's manual switching of switches may also be reduced by the use of limit, and/or proximity switches and relays, a bypass switch connected in parallel with the cam operated limit switch may be advantageous in the event the balance point of the movable frame was at a point when the lift arm A**7** angle was higher than when the limit switch was activated by the cam, as for example could happen if there was apart load left at the rear of the movable frame box. Each arm may be lifted by a separate lift spring, while the illustrated system has both arms fixed to each other and have a common lift spring.

In alternative aspects, the lift arm A7 may be attached to the movable frame. The lift pins M8 and slide plate M6 may be attached to the movable frame M16. Alternatively, should the lift arm A7 be attached to the movable frame M16, the lift pins M6 and slide plate M8 may be attached to the stationary frame. Alternatively, the lift pins M8 may be incorporated on the lift arm A7 with a mouth A400 and locking mechanism attached to either the movable or stationary frame. Although various embodiments of the invention are disclosed herein, many adaptations and modifications may be made within the scope of the invention as defined by the claims in accordance with the common general knowledge of those skilled in this art. References to one or more of the Figures shall not preclude reference to aspects of the invention also shown in other Figures. Numeric ranges are inclusive of the numbers defining the range. The word "comprising" is used as an open-ended term, substantially equivalent to the phrase "including, but not limited to", and the word "comprises" has a corresponding meaning.

## Claims

1. A loading apparatus for mounting a movable frame (11) on a stationary frame (19), wherein there is an elevatable support member (17) mounted on the stationary frame (19), the elevatable support member having a first end portion and a second end portion, the second end portion of the elevatable support (17) being mounted to the stationary frame (19) for pivotal movement with respect to the stationary frame (19) about an elevatable support axis (14) to provide an adjustable angle of the elevatable support (17); wherein a movement modulator (46) mounted on the stationary frame (19) cooperates with the elevatable support member (17) to modulate movement of the elevatable support member (17) about the elevatable support axis (14);
**characterised in that**
a drive is co-axially arranged with the elevatable support member (17) about the elevatable support axis (14); and the drive (12) is adapted for connection with the movable frame (11), so that the drive (12) may slidably move the movable frame (11) onto and off of the elevatable support member (17) and the stationary frame (19), while the movement modulator (46) permits the angle of the elevatable support member (17) to adapt about the elevatable support axis (14) so that the elevatable support member (17) slidingly engages the movable frame (11).

2. The apparatus of claim 1, wherein movement of the movable frame (11) powered by the drive (12) adapts the angle of the elevatable support (17) so that the elevatable support (17) slidingly engages the movable frame.

3. The apparatus of claim 1 or claim 2, where in the drive (12) is a sprocket powered by an axle (14), and the elevatable support (17) is rotably attached to the axle (14).

4. The apparatus of claim 2, wherein there is an interconnection between the elevatable support (17) and the moveable frame, during sliding movement of the movable frame, so that the movable frame (11) adapts the angle of the elevatable support (17) through the interconnection.

5. The apparatus of any one of claims 1 through 4, wherein the movement modulator (46) is powered to control the movement of first end portion of the elevatable support member (17) towards a raised position and to control movement of the first end portion of the elevatable support (17) towards a lowered position.

6. The apparatus of any one of claims 1 through 5, further comprising a rigid lift arm pivotally mounted about a lift arm axis on the stationary frame (19), wherein the lift arm comprises a lift arm head spaced apart from the lift arm axis, wherein the lift arm head is adapted to releasably engage the movable frame (11) at a lift arm attachment position to pivot the movable frame (11) into the raised position with the lift arm pivoting about the lift arm axis.

7. The apparatus of any one of claims 1 through 5, further comprising a rigid lift arm pivotally mounted about a lift arm axis on the movable frame, and the lift arm comprises a lift arm head spaced apart from the lift arm axis, wherein the lift arm head is adapted to releasably engage the stationary frame (19) at a lift arm attachment position to pivot the movable frame (11) into the raised position with the lift arm pivoting about the lift arm axis.

8. The apparatus of claim 6, wherein the movable frame (11) comprises a plurality of longitudinally spaced apart lift arm attachment positions, wherein the lift arm head end is adapted to be biased against the movable frame (11) to engage the lift arm attachment positions when the movable frame (11) is being moved by the drive (12) onto the stationary frame (19); and the lift arm head is adapted not to engage the lift arm attachment positions when biased against the movable frame (11) when the movable frame is being moved off of the stationary frame (19).

9. The apparatus of claim 7, wherein the stationary frame (19) comprises a plurality of longitudinally spaced apart lift arm attachment positions, wherein the lift arm head end is adapted to be biased against the stationary frame (19) to engage the lift arm attachment positions when the movable frame (11) is being moved by the drive (12) onto the stationary frame (19); and the lift arm head is adapted not to engage the lift arm attachment positions when biased against the stationary frame (19) when the movable frame (11) is being moved off of the stationary frame.

10. The apparatus of any one of claims 6 through 9, wherein the lift arm is adjustable between:
a) an actuated position in which the lift arm head is engagable with the lift arm attachment positions by movement of the moveable frame ; and,
b) a storage position in which the lift arm is not engagable with the lift arm attachment positions by movement of the moveable frame.

11. The apparatus of any one of claims 6 through 10, wherein the lift arm head is lockable on the lift arm attachment positions.

12. The apparatus of any preceding claim, wherein the movable frame (11) has a flexible connector (66,-83) releasably connectable to the drive (12) to move the movable frame (11) onto the stationary frame (19); and wherein the apparatus comprises a locking system (10) mounted on the stationary frame (19) to hold the flexible connector in releasable engagement with the drive (12), the locking system having a movable shoe arm (22) positionable to keep the flexible connector in engagement with a first portion of the drive (12), the shoe arm being movable by the movement of the movable frame, when driven by the drive (12), to displace the shoe arm so that the flexible connector may be released from the drive.

13. The apparatus of claim 12, wherein the locking system further comprises a sensing plate arm (32) adapted to contact the movable shoe arm (22) to lock the movable shoe arm into position to keep the flexible connector in engagement with the drive (12), wherein the sensing plate arm is movable by the movement of the movable frame, when driven by the drive (12), to displace the sensing plate arm to release the movable shoe arm so that the movable shoe arm may be displaced by the movable frame (11) to release the flexible connector from the drive (12).

14. The apparatus of claim 13 wherein the sensing plate arm is operably connected to a tab shaped to prevent the flexible connector from engaging a second portion of the drive (12), in cooperation with the movable shoe arm being positioned to keep the flexible connector in engagement with the first portion of the drive (12).

15. The apparatus of claim 12, 13 or 14 wherein the flexible connector is a chain and the drive (12) comprises a sprocket that engages the chain.

16. The apparatus of any one of claims 12 through 15, wherein the stationary frame (19) is mounted on a vehicle.

## Patentansprüche

1. Eine Ladevorrichtung zum Montieren eines beweglichen Rahmens (11) auf einem ortsfesten Rahmen (19), wobei ein auf dem ortsfesten Rahmen (19) montiertes erhöhbares Stützelement (17) vorhanden ist, wobei das erhöhbare Stützelement einen ersten Endabschnitt und einen zweiten Endabschnitt aufweist, wobei der zweite Endabschnitt der erhöhbaren Stütze (17) an dem ortsfesten Rahmen (19) zur schwenkbaren Bewegung mit Bezug auf den ortsfesten Rahmen (19) um eine Achse der erhöhbaren Stütze (14) montiert ist, um einen einstellbaren Winkel der erhöhbaren Stütze (17) bereitzustellen; wobei ein Bewegungsmodulator (46), der auf dem ortsfesten Rahmen (19) montiert ist, mit dem erhöhbaren Stützelement (17) zusammenarbeitet, um die Bewegung des erhöhbaren Stützelements (17) um die Achse der erhöhbaren Stütze (14) zu modulieren;
**dadurch gekennzeichnet, dass**
ein Antrieb koaxial mit dem erhöhbaren Stützelement (17) um die Achse der erhöhbaren Stütze (14) angeordnet ist; und der Antrieb (12) zur Verbindung mit dem beweglichen Rahmen (11) angepasst ist, so dass der Antrieb (12) den beweglichen Rahmen (11) gleitbar auf das erhöhbare Stützelement (17) und den ortsfesten Rahmen (19) und von diesen weg bewegen kann, während der Bewegungsmodulator (46) erlaubt, dass der Winkel des erhöhbaren Stützelements (17) um die Achse der erhöhbaren Stütze (14) angepasst wird, so dass das erhöhbare Stützelement (17) gleitend in den beweglichen Rahmen (11) eingreift.

2. Vorrichtung gemäß Anspruch 1, wobei die Bewegung des durch den Antrieb (12) angetriebenen beweglichen Rahmens (11) den Winkel der erhöhbaren Stütze (17) anpasst, so dass die erhöhbare Stütze (17) gleitend in den beweglichen Rahmen eingreift.

3. Vorrichtung gemäß Anspruch 1 oder Anspruch 2, wobei sich in dem Antrieb (12) ein durch eine Achswelle (14) angetriebenes Kettenrad befindet und die erhöhbare Stütze (17) drehbar an der Achswelle (14) befestigt ist.

4. Vorrichtung gemäß Anspruch 2, wobei es zwischen der erhöhbaren Stütze (17) und dem beweglichen Rahmen während der Gleitbewegung des beweglichen Rahmens eine Kopplung gibt, so dass der bewegliche Rahmen (11) den Winkel der erhöhbaren Stütze (17) durch die Kopplung anpasst.

5. Vorrichtung gemäß einem der Ansprüche 1 bis 4, wobei der Bewegungsmodulator (46) angetrieben wird, um die Bewegung des ersten Endabschnitts des erhöhbaren Stützelements (17) in Richtung einer angehobenen Position zu steuern und um die Bewegung des ersten Endabschnitts der erhöhbaren Stütze (17) in Richtung einer gesenkten Position zu steuern.

6. Vorrichtung gemäß einem der Ansprüche 1 bis 5, die ferner einen starren Hebearm, der schwenkbar um eine Hebearmachse auf dem ortsfesten Rahmen (19) montiert ist, beinhaltet, wobei der Hebearm einen Hebearmkopf beinhaltet, der von der Hebearmachse mit Abstand angeordnet ist, wobei der Hebearmkopf angepasst ist, um an einer Hebearmbefestigungsposition lösbar in den beweglichen Rahmen (11) einzugreifen, um den beweglichen Rahmen (11) in die angehobene Position zu schwenken, wobei der Hebearm um die Hebearmachse schwenkt.

7. Vorrichtung gemäß einem der Ansprüche 1 bis 5, die ferner einen starren Hebearm, der schwenkbar um eine Hebearmachse auf dem beweglichen Rahmen montiert ist, beinhaltet, wobei der Hebearm einen Hebearmkopf beinhaltet, der von der Hebearmachse mit Abstand angeordnet ist, wobei der Hebearmkopf angepasst ist, um lösbar in den ortsfesten Rahmen (19) an einer Hebearmbefestigungsposition einzugreifen, um den beweglichen Rahmen (11) in die angehobene Position zu schwenken, wobei der Hebearm um die Hebearmachse schwenkt.

8. Vorrichtung gemäß Anspruch 6, wobei der bewegliche Rahmen (11) eine Vielzahl von länglich mit Abstand angeordneten Hebearmbefestigungspositionen beinhaltet, wobei das Ende des Hebearmkopfs angepasst ist, um gegen den beweglichen Rahmen (11) vorgespannt zu werden, um in die Hebearmbefestigungspositionen einzugreifen, wenn der bewegliche Rahmen (11) durch den Antrieb (12) auf den ortsfesten Rahmen (19) bewegt wird; und der Hebearmkopf angepasst ist, um, wenn gegen den beweglichen Rahmen (11) vorgespannt, nicht in die Hebearmbefestigungspositionen einzugreifen, wenn der bewegliche Rahmen von dem ortsfesten Rahmen (19) weg bewegt wird.

9. Vorrichtung gemäß Anspruch 7, wobei der ortsfeste Rahmen (19) eine Vielzahl von länglich mit Abstand angeordneten Hebearmbefestigungspositionen beinhaltet, wobei das Ende des Hebearmkopfs angepasst ist, um gegen den ortsfesten Rahmen (19) vorgespannt zu werden, um in die Hebearmbefestigungspositionen einzugreifen, wenn der bewegliche Rahmen (11) durch den Antrieb (12) auf den ortsfesten Rahmen (19) bewegt wird; und der Hebearmkopf angepasst ist, um, wenn gegen den ortsfesten Rahmen (19) vorgespannt, nicht in die Hebearmbefestigungspositionen einzugreifen, wenn der bewegliche Rahmen (11) von dem ortsfesten Rahmen weg bewegt wird.

10. Vorrichtung gemäß einem der Ansprüche 6 bis 9, wobei der Hebearm zwischen folgenden Positionen einstellbar ist:
a) einer Position in Betrieb, In der der Hebearmkopf durch die Bewegung des beweglichen Rahmens in die Hebearmbefestigungspositionen eingreifen kann; und
b) einer Lagerposition, in der der Hebearm durch die Bewegung des beweglichen Rahmens nicht in die Hebearmbefestigungspositionen eingreifen kann.

11. Vorrichtung gemäß einem der Ansprüche 6 bis 10, wobei der Hebearmkopf auf den Hebearmbefestigungspositionen verriegelt werden kann.

12. Vorrichtung gemäß einem der vorhergehenden Ansprüche, wobei der bewegliche Rahmen (11) ein flexibles Verbindungsstück (66, 83) aufweist, das lösbar mit dem Antrieb (12) verbunden werden kann, um den beweglichen Rahmen (11) auf den ortsfesten Rahmen (19) zu bewegen; und wobei die Vorrichtung ein auf dem ortsfesten Rahmen (19) montiertes Verriegelungssystem (10) beinhaltet, um das flexible Verbindungsstück in lösbarem Eingriff mit dem Antrieb (12) zu halten, wobei das Verriegelungssystem einen beweglichen Schuharm (22) aufweist, der positionierbar ist, um das flexible Verbindungsstück in Eingriff mit einem ersten Abschnitt des Antriebs (12) zu halten, wobei der Schuharm durch die Bewegung des beweglichen Rahmens, wenn durch den Antrieb (12) getrieben, beweglich ist, um den Schuharm zu verschieben, so dass das flexible Verbindungsstück von dem Antrieb gelöst werden kann.

13. Vorrichtung gemäß Anspruch 12, wobei das Verriegelungssystem ferner einen Fühlplattenarm (32) beinhaltet, der angepasst ist, um den beweglichen Schuharm (22) zu kontaktieren, um den beweglichen Schuharm in Position zu verriegeln, um das flexible Verbindungsstück in Eingriff mit dem Antrieb (12) zu halten, wobei der Fühlplattenarm durch die Bewegung des beweglichen Rahmens, wenn getrieben durch den Antrieb (12), beweglich ist, um den Fühlplattenarm zu verschieben, um den beweglichen Schuharm zu lösen, so dass der bewegliche Schuharm durch den beweglichen Rahmen (11) verschoben werden kann, um das flexible Verbindungsstück von dem Antrieb (12) zu lösen.

14. Vorrichtung gemäß Anspruch 13, wobei der Fühlplattenarm betriebsfähig mit einem Dorn verbunden ist, der geformt ist, um das flexible Verbindungsstück daran zu hindern, in einen zweiten Abschnitt des Antriebs (12) einzugreifen, zusammen mit dem beweglichen Schuharm, der positioniert ist, um das flexible Verbindungsstück in Eingriff mit dem ersten Abschnitt des Antriebs (12) zu halten.

15. Vorrichtung gemäß Anspruch 12, 13 oder 14, wobei das flexible Verbindungsstück eine Kette ist und der Antrieb (12) ein Kettenrad beinhaltet, das in die Kette eingreift.

16. Vorrichtung gemäß einem der Ansprüche 12 bis 15, wobei der ortsfeste Rahmen (19) auf einem Fahrzeug montiert ist.

## Revendications

1. Un appareil de chargement destiné à monter un cadre mobile (11) sur un cadre stationnaire (19), dans lequel il y a un élément de support pouvant être élevé (17) monté sur le cadre stationnaire (19), l'élément de support pouvant être élevé présentant une première portion d'extrémité et une deuxième portion d'extrémité, la deuxième portion d'extrémité du support pouvant être élevé (17) étant montée sur le cadre stationnaire (19) pour se déplacer par pivotement par rapport au cadre stationnaire (19) autour d'un axe de support pouvant être élevé (14) afin de fournir un angle ajustable du support pouvant être élevé (17) ; dans lequel un modulateur de déplacement (46) monté sur le cadre stationnaire (19) coopère avec l'élément de support pouvant être élevé (17) pour moduler le déplacement de l'élément de support pouvant être élevé (17) autour de l'axe de support pouvant être élevé (14) ;
**caractérisé en ce que**
un entraînement est arrangé de façon coaxiale avec l'élément de support pouvant être élevé (17) autour de l'axe de support pouvant être élevé (14) ; et l'entraînement (12) est adapté pour se connecter avec le cadre mobile (11), de sorte que l'entraînement (12) peut déplacer de façon à pouvoir coulisser le cadre mobile (11) sur l'élément de support pouvant être élevé (17) et le cadre stationnaire (19) et hors de ceux-ci, tandis que le modulateur de déplacement (46) permet à l'angle de l'élément de support pouvant être élevé (17) de s'adapter autour de l'axe de support pouvant être élevé (14) de sorte que l'élément de support pouvant être élevé (17) se mette en prise par glissement avec le cadre mobile (11).

2. L'appareil de la revendication 1, dans lequel un déplacement du cadre mobile (11) actionné par l'entraînement (12) adapte l'angle du support pouvant être élevé (17) de sorte que le support pouvant être élevé (17) se mette en prise par glissement avec le cadre mobile.

3. L'appareil de la revendication 1 ou la revendication 2, dans lequel l'entraînement (12) est une roue dentée actionnée par un axe (14), et le support pouvant être élevé (17) est attaché de façon à pouvoir tourner à l'axe (14).

4. L'appareil de la revendication 2, dans lequel il y a une interconnexion entre le support pouvant être élevé (17) et le cadre mobile, au cours du déplacement par coulissement du cadre mobile, de sorte que le cadre mobile (11) adapte l'angle du support pouvant être élevé (17) par l'intermédiaire de l'interconnexion.

5. L'appareil de n'importe laquelle des revendications 1 à 4, dans lequel le modulateur de déplacement (46) est actionné pour contrôler le déplacement de la première portion d'extrémité de l'élément de support pouvant être élevé (17) en direction d'une position surélevée et pour contrôler le déplacement de la première portion d'extrémité du support pouvant être élevé (17) en direction d'une position abaissée.

6. L'appareil de n'importe laquelle des revendications 1 à 5, comprenant en outre un bras de levage rigide monté de façon à pivoter autour d'un axe de bras de levage sur le cadre stationnaire (19), dans lequel le bras de levage comprend une tête de bras de levage espacée de l'axe de bras de levage, dans lequel la tête de bras de levage est adaptée pour se mettre en prise de façon à pouvoir être libérée avec le cadre mobile (11) au niveau d'une position d'attache de bras de levage pour faire pivoter le cadre mobile (11) jusque dans la position surélevée, le bras de levage pivotant autour de l'axe de bras de levage.

7. L'appareil de n'importe laquelle des revendications 1 à 5, comprenant en outre un bras de levage rigide monté de façon à pivoter autour d'un axe de bras de levage sur le cadre mobile, et le bras de levage comprend une tête de bras de levage espacée de l'axe de bras de levage, dans lequel la tête de bras de levage est adaptée pour se mettre en prise de façon à pouvoir être libérée avec le cadre stationnaire (19) au niveau d'une position d'attache de bras de levage pour faire pivoter le cadre mobile (11) jusque dans la position surélevée, le bras de levage pivotant autour de l'axe de bras de levage.

8. L'appareil de la revendication 6, dans lequel le cadre mobile (11) comprend une pluralité de positions d'attache de bras de levage espacées de façon longitudinale, dans lequel l'extrémité de tête de bras de levage est adaptée pour être décalée contre le cadre mobile (11) pour se mettre en prise avec les positions d'attache de bras de levage lorsque le cadre mobile (11) est déplacé par l'entraînement (12) jusque sur le cadre stationnaire (19) ; et la tête de bras de levage est adaptée pour ne pas se mettre en prise avec les positions d'attache de bras de levage lorsqu'elle est décalée contre le cadre mobile (11) lorsque le cadre mobile est déplacé hors du cadre stationnaire (19).

9. L'appareil de la revendication 7, dans lequel le cadre stationnaire (19) comprend une pluralité de positions d'attache de bras de levage espacées de façon longitudinale, dans lequel l'extrémité de tête de bras de levage est adaptée pour être décalée contre le cadre stationnaire (19) pour se mettre en prise avec les positions d'attache de bras de levage lorsque le cadre mobile (11) est déplacé par l'entraînement (12) jusque sur le cadre stationnaire (19) ; et la tête de bras de levage est adaptée pour ne pas se mettre en prise avec les positions d'attache de bras de levage lorsqu'elle est décalée contre le cadre stationnaire (19) lorsque le cadre mobile (11) est déplacé hors du cadre stationnaire.

10. L'appareil de n'importe laquelle des revendications 6 à 9, dans lequel le bras de levage peut être ajusté entre :
a) une position mise en action dans laquelle la tête de bras de levage peut se mettre en prise avec les positions d'attache de bras de levage grâce au déplacement du cadre mobile ; et,
b) une position de stockage dans laquelle le bras de levage ne peut pas se mettre en prise avec les positions d'attache de bras de levage grâce au déplacement du cadre mobile.

11. L'appareil de n'importe laquelle des revendications 6 à 10, dans lequel la tête de bras de levage peut être verrouillée sur les positions d'attache de bras de levage.

12. L'appareil de n'importe quelle revendication précédente, dans lequel le cadre mobile (11) a un connecteur souple (66, 83) pouvant être connecté de façon à pouvoir être libéré à l'entraînement (12) pour déplacer le cadre mobile (11) jusque sur le cadre stationnaire (19) ; et dans lequel l'appareil comprend un système de verrouillage (10) monté sur le cadre stationnaire (19) pour maintenir le connecteur souple dans une mise en prise de façon à pouvoir être libéré avec l'entraînement (12), le système de verrouillage présentant un bras de patin mobile (22) pouvant être positionné pour garder le connecteur souple dans une mise en prise avec une première portion de l'entraînement (12), le bras de patin étant mobile grâce au déplacement du cadre mobile, lorsqu'il est entraîné par l'entraînement (12), pour changer la position du bras de patin de sorte que le connecteur souple puisse être libéré de l'entraînement.

13. L'appareil de la revendication 12, dans lequel le système de verrouillage comprend en outre un bras de plaque détectrice (32) adapté pour être en contact avec le bras de patin mobile (22) pour verrouiller le bras de patin mobile en position pour garder le connecteur souple dans une mise en prise avec l'entraînement (12), dans lequel le bras de plaque détectrice est mobile grâce au déplacement du cadre mobile, lorsqu'il est entraîné par l'entraînement (12), pour changer la position du bras de plaque détectrice pour libérer le bras de patin mobile de sorte que le bras de patin mobile puisse être changé de position par le cadre mobile (11) pour libérer le connecteur souple de l'entraînement (12).

14. L'appareil de la revendication 13 dans lequel le bras de plaque détectrice est connecté de façon opérationnelle à une patte formée pour empêcher le connecteur souple de se mettre en prise avec une deuxième portion de l'entraînement (12), en coopération avec le bras de patin mobile positionné pour garder le connecteur souple dans une mise en prise avec la première portion de l'entraînement (12).

15. L'appareil de la revendication 12, 13 ou 14 dans lequel le connecteur souple est une chaîne et l'entraînement (12) comprend une roue dentée qui se met en prise avec la chaîne.

16. L'appareil de n'importe laquelle des revendications 12 à 15, dans lequel le cadre stationnaire (19) est monté sur un véhicule.
